(19) Europäisches Patentamt
European Patent Office
Office européen des brevets

(11) EP 1 712 591 A1

(12) **EUROPEAN PATENT APPLICATION**
published in accordance with Art. 158(3) EPC

(43) Date of publication:
**18.10.2006 Bulletin 2006/42**

(21) Application number: **05710041.4**

(22) Date of filing: **03.02.2005**

(51) Int Cl.:
***C08L 23/00*** *(2006.01)* ***C08L 15/00*** *(2006.01)*
***C08J 3/24*** *(2006.01)*

(86) International application number:
**PCT/JP2005/001989**

(87) International publication number:
**WO 2005/075555 (18.08.2005 Gazette 2005/33)**

(84) Designated Contracting States:
**DE FR GB**

(30) Priority: **03.02.2004 JP 2004027238**
**01.03.2004 JP 2004056672**

(71) Applicant: **JSR Corporation**
**Tokyo 104-8410 (JP)**

(72) Inventors:
- **KANAE, Kentarou,**
**c/o JSR Corporation**
**Chuo-ku, Tokyo 1048410 (JP)**
- **MAEDA, Minoru,**
**c/o JSR Corporation**
**Chuo-ku, Tokyo 1048410 (JP)**
- **TSUTSUMI, Masami,**
**c/o JSR Corporation**
**Chuo-ku, Tokyo 1048410 (JP)**
- **HASEGAWA, Kenji,**
**c/o JSR Corporation**
**Chuo-ku, Tokyo 1048410 (JP)**

(74) Representative: **TBK-Patent**
**Bavariaring 4-6**
**80336 München (DE)**

# (54) THERMOPLASTIC ELASTOMER COMPOSITION, FORMED ARTICLE AND SEALING MATERIAL HAVING LOW HARDNESS

(57) A thermoplastic elastomer composition comprising the following components [A], [B], [C], and [D]: [A] 5 to 60 mass% of an ethylene-$\alpha$-olefin-based copolymer having a limiting viscosity of 3.5 dl/g or more measured in a decalin solvent at 135°C, [B] 1 to 20 mass% of a polyolefin-based resin, and [C] 30 to 94 mass% of a mineral oil-based softening agent, provided that the total of the components [A], [B], and [C] is 100 mass%, and for 100 parts by mass of the components [A], [B], and [C], [D] 0.1 to 50 parts by mass of a hydrogenated diene-based polymer, at least [A] the ethylene-$\alpha$-olefin-based copolymer and [B] the polyolefin-based resin being dynamically treated with heat in the presence of a cross-linking agent, or the above thermoplastic elastomer composition wherein [A] is replaced with an oil-extended rubber comprising [A1] 20 to 80 mass% of an ethylene-$\alpha$-olefin-based copolymer having a limiting viscosity of 3.5 dl/g or more measured in a decalin solvent at 135°C and [C1] 20 to 80 mass% of a mineral oil-based softening agent, provided that the total of [A1] and [C1] is 100 mass%. This thermoplastic elastomer composition excels in molding processability, has low hardness, is free from bleed-out of a mineral oil-based softening agent, has high flexibility and superior rubber elasticity (rebound resilience and compression set), and excels in recycling efficiency.

FIG. 1

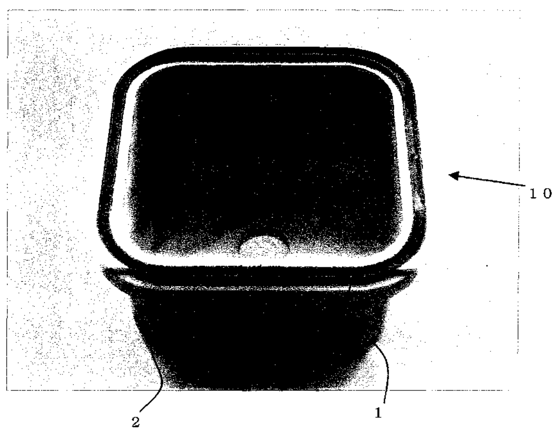




Printed by Jouve, 75001 PARIS (FR)

## Description

TECHNICAL FIELD

The present invention relates to a thermoplastic elastomer composition, a molded article thereof, and a sealing material having low hardness and, more particularly, to a thermoplastic elastomer composition excelling in molding processability, having low hardness, high flexibility, and superior rubber elasticity (rebound resilience and compression set), and free from bleed-out of a mineral oil-based softening agent, a molded article thereof, and a sealing material having low hardness using the thermoplastic elastomer composition.

BACKGROUND ART

Seals used for sealing materials of business machines, vehicles, building materials, and the like are very soft. Improvement of vulcanized rubber and vulcanized-foamed rubber, foamed polyurethane, and a thermoplastic elastomer composition useful as a flexible material has been attempted (Patent documents 1-3). A thermoplastic elastomer composition is disclosed in Patent document 1 and the like. The composition disclosed in this document does not have sufficient flexibility and, if a softening agent such as a mineral oil is added, causes problems such as bleed-out of the softening agent from the molded articles and a decrease of rubber elasticity.

Although the vulcanized rubber, vulcanized-foamed rubber, and foamed polyurethane satisfy requirements such as flexibility, sealing performance, and the like, these materials cannot satisfy the recycling efficiency which is highly demanded in view of resource preservation requirements in recent years.

Patent document 1: Japanese Patent Application Laid-open No. 2002-201313
Patent document 2: Japanese Patent Application Laid-open No. 2002-251061
Patent document 3: Japanese Patent Application Laid-open No. 7-234579

DISCLOSURE OF THE INVENTION

An object of the present invention is to provide a thermoplastic elastomer composition excelling in molding processability, having low hardness, free from bleed-out of a mineral oil-based softening agent, and having high flexibility and superior rubber elasticity (rebound resilience and compression set), a molded article thereof, and a sealing material having low hardness.

According to the present invention, the following thermoplastic elastomer compositions, molded articles thereof, and sealing materials with low hardness are provided.

(1) A thermoplastic elastomer composition comprising the following components [A], [B], [C], and [D]:

[A] 5 to 60 mass% of an ethylene-$\alpha$-olefin-based copolymer having a limiting viscosity of 3.5 dl/g or more measured in a decalin solvent at 135°C,
[B] 1 to 20 mass% of a polyolefin-based resin, and
[C] 30 to 94 mass% of a mineral oil-based softening agent, provided that the total of [A], [B], and [C] is 100 mass%, and for 100 parts by mass of the components [A], [B], and [C],
[D] 0.1 to 50 parts by mass of a hydrogenated diene-based polymer,
at least [A] the ethylene-$\alpha$-olefin-based copolymer and [B] the polyolefin-based resin being dynamically treated with heat in the presence of a crosslinking agent.

(2) A thermoplastic elastomer composition comprising the following components [X], [B1], [C2], and [D1]:

[X] 5 to 60 mass% of an oil-extended rubber comprising [A1] 20 to 80 mass% of an ethylene-$\alpha$-olefin-based copolymer having a limiting viscosity of 3.5 dl/g or more measured in a decalin solvent at 135°C and [C1] 20 to 80 mass% of a mineral oil-based softening agent, provided that the total of [A1] and [C1] is 100 mass%,
[B1] 1 to 20 mass% of a polyolefin-based resin, and
[C2] 30 to 94 mass% of a mineral oil-based softening agent, provided that the total of [X], [B1], and [C2] is 100 mass%, and for 100 parts by mass of the components [X], [B1], and [C2],
[D1] 0.1 to 50 parts by mass of a hydrogenated diene-based polymer,
at least [A1] the ethylene-$\alpha$-olefin-based copolymer and [B1] the polyolefin-based resin being dynamically treated with heat in the presence of a crosslinking agent.

(3) The thermoplastic elastomer composition according to (1) or (2), wherein the hydrogenated diene-based polymer [D] is at least one polymer selected from the group consisting of hydrogenated products of polymers comprising a monomer unit of a conjugated diene compound and hydrogenated products of polymers comprising a monomer unit of a conjugated diene compound and a monomer unit of a vinyl aromatic compound.
(4) The thermoplastic elastomer composition according to any one of (1) to (3), wherein the thermoplastic elastomer composition has a durometer E hardness according to JIS K6253 of 80 or less.
(5) The thermoplastic elastomer composition according to any one of (1) to (4), wherein the amount of ethylene monomer unit constituting the ethylene-α-olefin-based copolymer of [A] and [A1] is 35 to 95 mol% of the total monomer units consisting of the ethylene monomer unit and a monomer unit of an α-olefin compound.
(6) The thermoplastic elastomer composition according to any one of (1) to (5), wherein the mineral oil-based softening agent of [C], [C1], and [C2] is a paraffin-based mineral oil.
(7) The thermoplastic elastomer composition according to any one of (1) to (6), wherein the crosslinking agent is an organic peroxide selected from the group consisting of 1,3-bis(t-butylperoxyisopropyl)benzene, 2,5-dimethyl-2,5-di(t-butylperoxy)hexyne-3, 2,5-dimethyl-2,5-di(t-butylperoxy)hexane, α,α-bis(t-butylperoxy)diisopropylbenzene, dicumyl peroxide, and di-t-butyl peroxide.
(8) The thermoplastic elastomer composition according to any one of (1) to (7), wherein the ethylene-α-olefin-based copolymer in the thermoplastic elastomer composition has a cyclohexane insoluble content at 23°C of 60 mass% or more.
(9) A molded article made from the thermoplastic elastomer composition according to any one of (1) to (8).
(10) A sealing material with low hardness made from the thermoplastic elastomer composition according to any one of (1) to (8).
(11) The sealing material according to (10), having a durometer A hardness according to JIS K6253 of 40 or less.
(12) The sealing material according to (10) or (11), formed into the shape of an O-ring, a sheet, or a rod.
(13) A container using the sealing material according to any one of (10) to (12) as a component.
(14) A container formed from a composite body comprising a sealing part made from the sealing material according to any one of (10) to (12) and a main body, produced by injection molding.
(15) The container according to (14), wherein the main body is made from a thermoplastic resin and/or a thermoplastic elastomer composition and can be recycled.
(16) A toner case having the sealing material according to any one of (10) to (12) as a component.

The thermoplastic elastomer composition of the present invention comprises: [A] 5 to 60 mass% of an ethylene-α-olefin-based copolymer having a limiting viscosity of 3.5 dl/g or more measured in a decalin solvent at 135°C, [B] 1 to 20 mass% of a polyolefin-based resin, and [C] 30 to 94 mass% of a mineral oil-based softening agent (provided that the total of [A], [B], and [C] is 100 mass%), and for 100 parts by mass of the components [A], [B], and [C], [D] 0.1 to 50 parts by mass of a hydrogenated diene-based polymer, in which at least [A] the ethylene-α-olefin-based copolymer and [B] the polyolefin-based resin are dynamically treated with heat in the presence of a crosslinking agent. The treatment with heat improves molding processability of the composition by injection molding, extrusion molding, hollow molding, compression molding, vacuum molding, laminate molding, calender molding, or the like, and produces a thermoplastic elastomer composition with low hardness, excellent flexibility without bleeding-out a mineral oil-based softening agent, and superior rubber elasticity (rebound resilience and compression set).
Another thermoplastic elastomer composition of the present invention comprises: [X] 5 to 60 mass% of an oil-extended rubber comprising [A1] 20 to 80 mass% of an ethylene-α-olefin-based copolymer having a limiting viscosity of 3.5 dl/g or more measured in a decalin solvent at 135°C and [C1] 20 to 80 mass% of a mineral oil-based softening agent (provided that the total of [A1] and [C1] is 100 mass%), [B1] 1 to 20 mass% of a polyolefin-based resin, and [C2] 30 to 94 mass% of a mineral oil-based softening agent (provided that the total of [X], [B1], and [C2] is 100 mass%), and for 100 parts by mass of the components [X], [B1], and [C2], [D1] 0.1 to 50 parts by mass of a hydrogenated diene-based polymer, in which at least [A1] the ethylene-α-olefin-based copolymer and [B1] the polyolefin-based resin are dynamically treated with heat in the presence of a crosslinking agent. The treatment with heat improves molding processability of the composition by injection molding, extrusion molding, hollow molding, compression molding, vacuum molding, laminate molding, calender molding, or the like, and produces a thermoplastic elastomer composition exhibiting low hardness, excellent flexibility without bleeding-out a mineral oil-based softening agent, and superior rubber elasticity (rebound resilience and compression set).
When the hydrogenated diene-based polymer [D] is at least one polymer selected from the group consisting of hydrogenated products of polymers comprising a monomer unit of a conjugated diene compound and hydrogenated products of polymers comprising a monomer unit of a conjugated diene compound and a monomer unit of a vinyl aromatic compound, the thermoplastic elastomer composition has a durometer E hardness according to JIS K6253 of 80 or less and is flexible.
In addition, when the ethylene-α-olefin-based copolymer in the thermoplastic elastomer composition has a cyclohexane

insoluble content at 23°C of 60 mass% or more, the composition can produce molded articles with excellent rubber elasticity and mechanical strength.

The molded article of the present invention has low hardness, is free from bleeding-out of a mineral oil-based softening agent, and has high flexibility and superior rubber elasticity (rebound resilience and compression set). In addition, since the sealing material of the present invention is formed from the thermoplastic elastomer composition, the sealing material can be recycled and is a very excellent resource saving material.

The container in which this low hardness sealing material is used as a component and which consists of a sealing part made from the sealing material and a container main body, can be integrally formed by injection molding in a short period of time. The process is laborsaving and the product excels in recycling efficiency.

BRIEF DESCRIPTION OF THE DRAWINGS

Figure 1 is a photograph of a container with a sealing part in which the low hardness sealing material of the present invention is used.

Figure 2 is a photograph of the container with the sealing part of Figure 1 in a state in which the sealing part is separated from the container main body.

Figure 3 is a drawing illustrating a water leak drop test.

EXPLANATION OF SYMBOLS

1: sealing part, 2: container main body, 10: container, 11: cover, 12: double clip, 13: paper board, 14: packing, 15: water

BEST MODE FOR CARRYING OUT THE INVENTION

The present invention will now be described in detail.

The thermoplastic elastomer composition of the first embodiment of the present invention comprises: [A] 5 to 60 mass% of an ethylene-α-olefin-based copolymer having a limiting viscosity of 3.5 dl/g or more measured in a decalin solvent at 135°C, [B] 1 to 20 mass% of a polyolefin-based resin, and [C] 30 to 94 mass% of a mineral oil-based softening agent (provided that the total of [A], [B], and [C] is 100 mass%), and for 100 parts by mass of the components [A], [B], and [C], [D] 0.1 to 50 parts by mass of a hydrogenated diene-based polymer, wherein at least [A] the ethylene-α-olefin-based copolymer and [B] the polyolefin-based resin are dynamically treated with heat in the presence of a crosslinking agent.

The thermoplastic elastomer composition of the second embodiment of the present invention comprises: [X] 5 to 60 mass% of an oil-extended rubber comprising [A1] 20 to 80 mass% of an ethylene-α-olefin-based copolymer having a limiting viscosity of 3.5 dl/g or more measured in a decalin solvent at 135°C and [C1] 20 to 80 mass% of a mineral oil-based softening agent (provided that the total of [A1] and [C1] is 100 mass%), [B1] 1 to 20 mass% of a polyolefin-based resin, and [C2] 30 to 94 mass% of a mineral oil-based softening agent (provided that the total of [X], [B1], and [C2] is 100 mass%), and for 100 parts by mass of the components [X], [B1], and [C2], [D1] 0.1 to 50 parts by mass of a hydrogenated diene-based polymer, wherein at least [A1] the ethylene-α-olefin-based copolymer and [B1] the polyolefin-based resin are dynamically treated with heat in the presence of a crosslinking agent.

Each component will be described in more detail.

1. Ethylene-α-olefin-based copolymer ([A] and [A1])

The ethylene-α-olefin-based copolymer (hereinafter referred to from time to time as "EAO-based copolymer") is a copolymer comprising an ethylene monomer unit (a1) and a monomer unit (a2) of α-olefin (excluding ethylene) with 3 or more carbon atoms.

The amount of the ethylene monomer unit (a1) is preferably 35 to 95 mol%, more preferably 40 to 90 mol%, and still more preferably 45 to 85 mol% of the total monomer units in the EAO-based copolymer. If the amount of the ethylene monomer unit (a1) is too great, the resulting thermoplastic elastomer composition has a tendency of not exhibiting sufficient flexibility; if too small, the mechanical strength may not be sufficient.

As the α-olefin of the monomer unit (a2), α-olefins having 3 or more carbon atoms, such as propylene, 1-butene, 2-butene, isobutene, 1-pentene, 2-methyl-1-butene, 2-methyl-2-butene, 3-methylbutene, 1-hexene, 4-methyl-1-pentene, 3-methyl-1-pentene, 1-heptene, 1-octene, 1-decene, 1-undecene, and the like are preferable. These α-olefins can be used either individually or in combination of two or more. Of these α-olefins, α-olefins having 3 to 10 carbon atoms are more preferable because such α-olefins easily copolymerize with other monomers which may be contained in the EAO-based copolymer. Particularly preferable α-olefins are propylene, 1-butene, 1-hexene, and 1-octene, with

propylene and 1-butene being particularly preferable.

The amount of the monomer unit (a2) is preferably 5 to 65 mol%, more preferably 10 to 45 mol%, and particularly preferably 15 to 40 mol% of the total monomer units in the EAO-based copolymer. If the amount of the monomer unit (a2) is too small, the resulting thermoplastic elastomer composition may not exhibit desired rubber elasticity. If too great, durability of the resulting composition may be poor.

The EAO-based copolymer may be a binary copolymer consisting of the monomer units (a1) and (a2) or may be another copolymer (ternary copolymer, quaternary copolymer, etc.) consisting of the monomer units (a1) and (a2) and other monomer units (a3). As examples of the other monomer units, a monomer unit of a non-conjugated diene compound, and the like can be given.

Given as examples of the non-conjugated diene compounds are linear non-cyclic diene compounds such as 1,4-hexadiene, 1,5-hexadiene, and 1,6-hexadiene; branched linear non-cyclic diene compounds such as 5-methyl-1,4-hexadiene, 3,7-dimethyl-1,6-octadiene, 5,7-dimethylocta-1,6-diene, 3,7-dimethyl-1,7-octadiene, 7-methylocta-1,6-diene, and dihydromyrcene; alicyclic diene compounds such as tetrahydroindene, methyltetrahydroindene, dicyclopentadiene, bicyclo [2.2.1]-hepta-2,5-diene, 5-methylene-2-norbornene, 5-ethylidene-2-norbornene, 5-propenyl-2-norbornene, 5-isopropylidene-2-norbornene, 5-cyclohexylidene-2-norbornene, and 5-vinyl-2-norbomene; and the like. These non-conjugated diene compounds can be used either individually or in combination of two or more. Of the above non-conjugated diene compounds, 1,4-hexadiene, dicyclopentadiene, and 5-ethylidene-2-norbornene are particularly preferable.

When the EAO-based copolymer containing the above-mentioned monomer unit (a3) is used, the amount of the monomer unit (a3) is preferably 10 mol% or less, and more preferably 1 to 8 mol% of the total monomer units in the EAO-based copolymer. If the amount of the monomer unit (a3) is too great, durability of the resulting composition may be poor.

The limiting viscosity of the EAO-based copolymer (measured in a decalin solvent at 135°C) is 3.5 dl/g or more, preferably 3.8 dl/g or more, and more preferably 4.0 to 7.0 dl/g. If the limiting viscosity is less than 3.5 dl/g, the mineral oil-based softening agent may bleed out from the resulting thermoplastic elastomer composition and rubber elasticity may decrease.

As the above-mentioned EAO-based copolymer, a halogenated copolymer in which part of the hydrogen atoms in the molecule were replaced with halogen atoms such as a chlorine atom and a bromine atom can be used.

A graft polymer obtained by copolymerizing unsaturated monomers such as vinyl chloride, vinyl acetate, (meth)acrylic acid, (meth)acrylic acid derivatives [methyl (meth)acrylate, glycidyl (meth)acrylate, (meth)acrylamide, etc.], maleic acid, maleic acid derivatives (maleic anhydride, maleimide, dimethyl maleate, etc.), and conjugated diene compounds (butadiene, isoprene, chloroprene, etc.) with these copolymers can also be used.

These EAO-based copolymers can be used either individually or in combination of two or more.

The content of the EAO-based copolymer [A] contained in the thermoplastic elastomer composition of the first embodiment of the present invention is 5 to 60 mass%, preferably 10 to 58 mass%, and more preferably 15 to 55 mass% of the total amount of the EAO-based copolymer [A], polyolefin-based resin [B], and mineral oil-based softening agent [C]. If the amount of the EAO-based copolymer [A] is too great, the resulting thermoplastic elastomer composition may not be sufficiently flexible; if too small, the mineral oil-based softening agent [C] may bleed out.

As the ethylene-α-olefin-based copolymer [A1] for the oil-extended rubber [X] in the thermoplastic elastomer composition of the second embodiment of the present invention, the above-mentioned ethylene-α-olefin-based copolymers can be used as is. The respective contents of the EAO-based copolymer [A1] and the mineral oil-based softening agent [C1] forming the oil-extended rubber [X] are 20 to 80 mass% and 20 to 80 mass%, preferably 25 to 75 mass% and 25 to 75 mass%, and more preferably 30 to 70 mass% and 30 to 70 mass% of the total amount of the EAO-based copolymer [A1] and the mineral oil-based softening agent [C1].

The content of the oil-extended rubber [X] contained in the thermoplastic elastomer composition of the second embodiment of the present invention is 5 to 60 mass%, preferably 10 to 58 mass%, and more preferably 15 to 55 mass% in the total amount of the oil-extended rubber [X], polyolefin-based resin [B], and mineral oil-based softening agent [C2]. If the amount of the oil-extended rubber [X] is too great, the resulting thermoplastic elastomer composition may not be sufficiently flexible; if too small, the mineral oil-based softening agent [C1] and/or [C2] may bleed out.

The EAO-based copolymer ([A] or [A1]) can be obtained by polymerization under medium or low pressure, for example, by polymerization of ethylene, an α-olefin, and a non-conjugated diene compound in the presence of a catalyst in which a Ziegler-Natta catalyst, a soluble vanadium compound, and an organoaluminum compound, for example, are dissolved in a solvent, optionally while supplying hydrogen as a molecular weight modifier. Either gas phase polymerization (a fluid bed or stirring bed) or liquid polymerization (a slurry method or solution method) can be used.

As an example of the soluble vanadium compound, a reaction product of an alcohol and either $VOCl_3$ or $VCl_4$ is preferably used. As the alcohol, methanol, ethanol, n-propanol, isopropanol, n-butanol, sec-butanol, t-butanol, n-hexanol, n-octanol, 2-ethylhexanol, n-decanol, n-dodecanol, and the like can be given. Of these, alcohols having 3 to 8 carbon atoms are preferably used.

As examples of the organoaluminum compound, triethylaluminum, triisobutylaluminum, tri-n-hexylaluminum,

diethylaluminum monochloride, diisobutylaluminum monochloride, ethylaluminum sesquichloride, butylaluminum sesquichloride, ethylaluminum dichloride, butylaluminum dichloride, methylaluminoxane which is a reaction product of trimethylaluminum and water, and the like can be given. Of these, ethylaluminum sesquichloride, butylaluminum sesquichloride, a mixture of ethylaluminum sesquichloride and triisobutylaluminum, and a mixture of triisobutylaluminum and butylaluminum sesquichloride are particularly preferable. As the solvent, hydrocarbons are preferably used. Preferable hydrocarbon solvents are n-pentane, n-hexane, n-heptane, n-octane, isooctane, cyclohexane, and the like. These solvents may be used either individually or in combination of two or more.

The non-oil extended ethylene-α-olefin-based copolymer [A] and the oil-extended rubber [X] of the ethylene-α-olefin-based copolymer may be in the form of bales, crumbs, pellets, fine particles (including a ground product of bales). The non-oil extended ethylene-α-olefin-based copolymer [A] and the oil extended ethylene-α-olefin-based copolymer [X] may be used in combination.

2. Polyolefin-based resin ([B] and [B1])

The polyolefin-based resin may be either a homopolymer of an α-olefin or a copolymer containing one or more monomer units of α-olefins in a proportion of more than 50 mol%. In the case of a copolymer, such a copolymer may be either a copolymer of α-olefins or a copolymer of α-olefins and other monomers copolymerizable with the α-olefins. The polyolefin-based resin may be either a crystalline resin and/or a noncrystalline resin.

In the case in which a crystalline polyolefin-based resin (B-a) is used, the crystallinity determined by X-ray diffraction is 50% or more, preferably 53% or more, and more preferably 55% or more. The crystallinity is closely related to density. For example, in the case of polypropylene, the density of α-type crystals (monoclinic system) is 0.936 g/cm$^3$, the density of smectic microcrystals (pseudohexagonal crystal) is 0.886 g/cm$^3$, and the density of amorphous (atactic) component is 0.850 g/cm$^3$. In the case of poly-1-butene, the density of isotactic crystal component is 0.91 g/cm$^3$ and the density of amorphous (atactic) component is 0.87 g/cm$^3$.

Therefore, the density of the crystalline polyolefin-based resin (B-a) is preferably 0.89 g/cm$^3$ or more, more preferably 0.90 to 0.94 g/cm$^3$. The density in this range ensures crystallinity of 50% or more. If the crystallinity of the crystalline polyolefin-based resin (B-a) is less than 50% and the density is less than 0.89 g/cm$^3$, the resulting thermoplastic elastomer composition tends to have decreased heat resistance, strength, etc.

Preferable α-olefins forming such a crystalline polyolefin-based resin (B-a) are those having 2 or more carbon atoms, and more preferably 2 to 12 carbon atoms. Of these, propylene and 1-butene are preferable.

The amount of α-olefin monomer unit (b1) forming the crystalline polyolefin-based resin (B-a) is preferably 80 mol% or more, and more preferably 90 to 100 mol% of the total monomer units forming the crystalline polyolefin-based resin (B-a). When the crystalline polyolefin-based resin (B-a) is a copolymer, such a copolymer may be either a block copolymer or a random copolymer. In order to produce a block copolymer with a crystallinity of the above range, the total amount of structural units other than the α-olefin monomer unit (b1) is preferably 40 mol% or less, and more preferably 20 mol% or less of the total monomer units forming the block copolymer. This block copolymer can be obtained by living polymerization using a Ziegler-Natta catalyst.

In order to produce a random copolymer with a crystallinity of the above range, the total amount of structural units other than the α-olefin monomer unit (b1) is preferably 15 mol% or less, and more preferably 10 mol% or less of the total monomer units forming the random copolymer.

The random copolymer can be obtained by polymerizing α-olefin and the like in the presence of catalyst components containing, for example, a Ziegler-Natta catalyst, a soluble vanadium compound, an organoaluminum compound, and a solvent. For polymerization, polymerization under medium or low pressure conditions such as gas phase polymerization (a fluid bed or stirring bed), liquid polymerization (a slurry method or solution method), and the like can be used. A molecular weight modifier such as hydrogen gas can be optionally used for the polymerization.

As the soluble vanadium compound, a reaction product of an alcohol and either $VOCl_3$, or $VCl_4$, or both, is preferably used. As the alcohol, methanol, ethanol, n-propanol, isopropanol, n-butanol, sec-butanol, t-butanol, n-hexanol, n-octanol, 2-ethylhexanol, n-decanol, n-dodecanol, and the like can be given. Of these, alcohols having 3 to 8 carbon atoms are preferably used.

As examples of the organoaluminum compound, triethylaluminum, triisobutylaluminum, tri-n-hexylaluminum, diethylaluminum monochloride, diisobutylaluminum monochloride, ethylaluminum sesquichloride, butylaluminum sesquichloride, ethylaluminum dichloride, butylaluminum dichloride, methylaluminoxane which is a reaction product oftrimethylaluminum and water, and the like can be given. Of these, ethylaluminum sesquichloride, butylaluminum sesquichloride, a mixture of ethylaluminum sesquichloride and triisobutylaluminum, and a mixture of triisobutylaluminum and butylaluminum sesquichloride are preferable.

As the solvent, hydrocarbons are preferably used. Preferable hydrocarbon solvents are n-pentane, n-hexane, n-heptane, n-octane, isooctane, cyclohexane, and the like. These solvents can be used either individually or in combination of two or more.

The melting point of the crystalline polyolefin-based resin (B-a), that is, the maximum peak temperature determined by differential scanning calorimetry, is preferably 100°C or more, and more preferably 120°C or more. If the melting

point is less than 100°C, the product may not exhibit sufficient heat resistance and strength.
The melt flow rate at a temperature of 230°C and a load of 2.16 kg (hereinafter referred to as "MFR") of the crystalline polyolefin-based resin (B-a) is preferably 0.1 to 1,000 g/10 minutes, more preferably 0.5 to 500 g/10 minutes, and still more preferably 1 to 100 g/10 minutes. If the MFR is less than 0.1 g/10 minutes, kneading processability, extrusion processability, and the like of the raw material composition tend to be insufficient. If more than 1,000 g/10 minutes, on the other hand, the strength of the resulting thermoplastic elastomer composition tends to decrease.

Therefore, as the crystalline polyolefin-based resin (B-a), a resin with a crystallinity of 50% or more, a density of 0.89 g/cm$^3$ or more, an ethylene monomer unit content of 20 mol% or less, a melting point of 100°C or more, and MFR of 0.1 to 100 g/10 minutes is preferable. Use of polypropylene and/or a copolymer of propylene and ethylene having a melting point of 140 to 170°C is particularly preferable.
These crystalline polyolefin-based resins (B-a) can be used either individually or in combinations of two or more.

In the case in which a noncrystalline polyolefin-based resin (B-b) (hereinafter referred to from time to time as "amorphous polyolefin-based resin (B-b)") is used as the polyolefin-based resin, the crystallinity determined by X-ray diffraction is less than 50%, preferably 30% or less, and more preferably 20% or less. In terms of density, the amorphous polyolefin-based resin (B2) has a density preferably of 0.85 to 0.89 g/cm$^3$, and more preferably 0.85 to 0.88 g/cm$^3$.

$\alpha$-olefins forming such an amorphous polyolefin-based resin (B-b) are preferably those having 3 or more carbon atoms, and more preferably 3 to 12 carbon atoms.
The amount of the $\alpha$-olefin monomer unit (b2) forming the amorphous polyolefin-based resin (B-b) is preferably 60 mol% or more of the total monomer units forming the amorphous polyolefin-based resin (B-b).

As examples of the amorphous polyolefin-based resin (B-b), homopolymers such as atactic polypropylene and atactic poly-1-butene, copolymers of more than 50% of propylene and other $\alpha$-olefins (ethylene, 1-butene, 1-pentene, 1-hexene, 4-methyl-1-pentene, 1-octene, 1-decene, etc.), copolymers of more than 50% of 1-butene and other $\alpha$-olefins (ethylene, propylene, 1-pentene, 1-hexene, 4-methyl-1-pentene, 1-octene, 1-decene, etc.), and the like can be given.
Atactic polypropylene and atactic poly-1-butene can be obtained by polymerization using a zirconocene compound-methylaluminoxane catalyst.
Atactic polypropylene can also be obtained as a byproduct of polypropylene described above as an example of the crystalline polyolefin-based polymer (B-a).

When the amorphous polyolefin-based resin (B-b) is a copolymer, such a copolymer may be either a block copolymer or a random copolymer. However, in the case of a block copolymer, the monomer unit (b2) containing more than 50 mol% of $\alpha$-olefins must bond by the atactic structure. This block copolymer can be obtained by living polymerization using a Ziegler-Natta catalyst. The random copolymer can be obtained in the same manner as the crystalline polyolefin-based polymer (B-a).
When the amorphous polyolefin-based resin (B-b) is a copolymer of an $\alpha$-olefin with 3 or more carbon atoms and ethylene, the amount of the $\alpha$-olefin monomer unit (b2) is preferably 60 to 100 mol% of the total monomer units forming the amorphous polyolefin-based resin (B-b).

As the amorphous polyolefin-based resin (B-b), atactic polypropylene, a copolymer of more than 50% of a propylene monomer unit and ethylene monomer unit, and a copolymer of propylene and 1-butene are particularly preferable.

The polystyrene-reduced number average molecular weight of the amorphous polyolefin-based resin (B-b) determined by GPC is preferably 1,000 to 20,000, and more preferably 1,500 to 15,000.
The amorphous polyolefin-based resins (B-b) can be used either individually or in combinations of two or more.
The above-mentioned crystalline polyolefin-based resin (B-a) and the amorphous polyolefin-based resin (B-b) may be used either individually or in combination according to the object, application, and the like.

The content of the polyolefin-based resin [B] in the thermoplastic elastomer composition of the first embodiment of the present invention is 1 to 20 mass%, preferably 3 to 18 mass%, and more preferably 5 to 15 mass% of the EAO-based copolymer [A], polyolefin-based resin [B], and mineral oil-based softening agent [C]. If the amount of the polyolefin-based resin [B] is too great, the resulting thermoplastic elastomer composition may not be sufficiently flexible; if too small, kneading processability tends to be impaired.

The content of the polyolefin-based resin [B1] in the thermoplastic elastomer composition of the second embodiment of the present invention is 1 to 20 mass%, preferably 3 to 18 mass%, and more preferably 5 to 15 mass% of the oil-extended rubber [X], polyolefin-based resin [B1], and mineral oil-based softening agent [C2]. If the amount of the polyolefin-based resin [B1] is too great, the resulting thermoplastic elastomer composition may not be sufficiently flexible; if too small, kneading processability tends to be impaired.

3. Mineral oil-based softening agent ([C], [C1], and [C2])
There are no specific limitations to the type of the mineral oil-based softening agent insofar as the mineral oil-based softening agent is an agent conventionally used with rubber products. Paraffinic, naphthenic, and aromatic mineral oils can be given as examples.
A rubber softening agent of mineral oil-based hydrocarbons is usually a mixture of aromatic rings, naphthenic rings, and

paraffinic chains. Hydrocarbons in which the content of carbon atoms in paraffinic chains is 50% or more of the total carbon atoms are classified as praffinic mineral oils; hydrocarbons in which the content of carbon atoms in naphthenic rings is 30 to 45% of the total carbon atoms are classified as naphthenic mineral oils; and hydrocarbons in which the content of carbon atoms in aromatic rings is 30% or more of the total carbon atoms are classified as aromatic mineral oils. The paraffinic, naphthenic, and aromatic mineral oils may be used in combination, each of them may be used individually, or two or more of them may be used in combination. Of these, paraffinic mineral oils, particularly hydrogenated paraffinic mineral oils, are preferable in any of the mineral oils [C], [C1], and [C2]. As examples of the paraffinic mineral oils, "Diana Process Oil PW90", "Diana Process Oil PW380" manufactured by Idemitsu Kosan Co., Ltd., and the like can be given.

The polystyrene-reduced weight average molecular weight (Mw) of the mineral oil-based softening agent determined by GPC is preferably 300 to 2,000, and more preferably 500 to 1,500. The kinematic viscosity at 40°C is preferably 20 to 800 cSt, and more preferably 50 to 600 cSt. The pour point is preferably from -40 to 0°C, and more preferably from -30 to 0°C.

The mineral oil-based softening agent may be used in combination with low molecular weight hydrocarbons such as polybutene hydrocarbons and polybutadiene hydrocarbons, and the like.

The content of the mineral oil-based softening agent [C] in the thermoplastic elastomer composition of the first embodiment of the present invention is 30 to 94 mass%, preferably 32 to 87 mass%, and more preferably 35 to 80 mass% of the total amount of the EAO-based copolymer [A], polyolefin-based resin [B], and mineral oil-based softening agent [C]. If the amount of the mineral oil-based softening agent [C] is too great, the resulting thermoplastic elastomer composition tends to have only insufficient strength and the mineral oil-based softening agent [C] may bleed out. If too small, on the other hand, the flexibility of the resulting thermoplastic elastomer composition tends to decrease.

The mineral oil-based softening agent [C2] used in the thermoplastic elastomer composition of the second embodiment of the present invention may be the same or different type of softening agent as the mineral oil-based softening agent [C1] used in the oil-extended rubber [X]. The content of the mineral oil-based softening agent [C2] is 30 to 94 mass%, preferably 32 to 87 mass%, and more preferably 35 to 80 mass% of the total amount of the oil-extended rubber [X], polyolefin-based resin [B], and mineral oil-based softening agent [C2]. If the amount of the mineral oil-based softening agent [C2] is too great, the resulting thermoplastic elastomer composition tends to have only insufficient strength and the mineral oil-based softening agent [C2] may bleed out. If too small, on the other hand, the flexibility of the resulting thermoplastic elastomer composition tends to decrease.

The total amount of the mineral oil-based softening agent contained in the thermoplastic elastomer composition of the second embodiment of the present invention is smaller than the total amount of the mineral oil-based softening agent contained in the thermoplastic elastomer composition of the first embodiment. This is because the oil-extended rubber [X] already contains the mineral oil-based softening agent [C1] in the second embodiment.

4. Hydrogenated diene-based polymer ([D] and [D1])

There are no specific limitations to the hydrogenated diene-based polymer insofar as such a polymer is a hydrogenated product of a diene polymer comprising a monomer unit of a conjugated diene compound. For example, (I) a hydrogenated product of a (co)polymer consisting of monomer units of conjugated diene compounds, (II) a hydrogenated product of a polymer comprising a monomer unit of a conjugated diene compound and a monomer unit of a compound copolymerizable with the conjugated diene compound (such as a vinyl aromatic compound), and the like can be given.

The hydrogenated diene-based polymers (I), (II), and the like may be used either individually or in combination. A combination of the hydrogenated diene-based polymer (I) and the hydrogenated diene-based polymer (II) may also be used. The hydrogenated diene-based polymer may be either crosslinked or not crosslinked in the thermoplastic elastomer composition.

As the hydrogenated diene-based polymer (I), a hydrogenated butadiene block copolymer and the like can be given.

As the hydrogenated diene-based polymer (II), (i) a block copolymer containing a polymer block of a vinyl aromatic compound and a polymer block of a conjugated diene compound (e.g. a hydrogenated styrene-butadiene block copolymer, hydrogenated styrene-isoprene block copolymer, hydrogenated styrene-butadiene-isoprene block copolymer, etc.); (ii) a block copolymer containing a polymer block of a vinyl aromatic compound and a random copolymer block of a conjugated diene compound and a vinyl aromatic compound; (iii) a block copolymer containing a polymer block of a conjugated diene compound and a copolymer block of a conjugated diene compound and a vinyl aromatic compound; (iv) a block copolymer containing a polymer block of a conjugated diene compound and a taper block of a vinyl aromatic compound and a conjugated diene compound, in which the monomer unit of the vinyl aromatic compound gradually increases; (v) a block copolymer containing a random copolymer block of a conjugated diene compound and a vinyl aromatic compound and a taper block of a vinyl aromatic compound and a conjugated diene compound, in which the monomer unit of the vinyl aromatic compound gradually increases; and the like can be given.

As examples of the conjugated diene compound, 1,3-butadiene, isoprene, 2,3-dimethyl-1,3-butadiene, 1,3-pentadiene, 2-methyl-1,3-pentadiene, 1,3-hexadiene, 4,5-diethyl-1,3-octadiene, 3-butyl-1,3-octadiene, and chloroprene can be given. These conjugated diene compounds can be used either individually or in combination of two or more. Of

the above conjugated diene compounds, 1,3-butadiene, isoprene, and 1,3-pentadiene are particularly preferable. As the vinyl aromatic compound, styrene, t-butylstyrene, α-methylstyrene, p-methylstyrene, p-ethylstyrene, divinylbenzene, 1,1-diphenylstyrene, vinylnaphthalene, vinylanthracene, N,N-diethyl-p-aminoethylstyrene, vinylpyridine, and the like can be given. These vinyl aromatic compounds can be used either individually or in combination of two or more. Of these, styrene is preferable.

As the hydrogenated diene-based polymer, a halogenated hydrogenated diene-based polymer in which part of the hydrogen atoms in the molecule are replaced with halogen atoms such as a chlorine atom and a bromine atom can be used.

A graft polymer obtained by copolymerizing unsaturated monomers such as vinyl chloride, vinyl acetate, (meth)acrylic acid, (meth)acrylic acid derivatives [methyl (meth)acrylate, glycidyl (meth)acrylate, (meth)acrylamide, etc.], maleic acid, maleic acid derivatives (maleic anhydride, maleimide, dimethyl maleate, etc.), and conjugated diene compounds (butadiene, isoprene, chloroprene, etc.) with these polymers can also be used.

The hydrogenation rate of the hydrogenated diene-based polymer is preferably 70% or more, more preferably 90% or more, and still more preferably 95% or more. The "hydrogenation rate" is a value indicating the percentage of the number of hydrogenated olefinic unsaturated bonds in the side chain or main chain of conjugated diene units forming the diene-based polymer for the number of the olefinic unsaturated bonds in the side chain or main chain existing before hydrogenation.

Either a crosslinked polymer or non-crosslinked polymer may be used as the hydrogenated diene-based polymer. The crosslinked polymer and non-crosslinked polymer may be used in combination. The crosslinked hydrogenated diene-based polymer can be obtained by known methods described later.

The hydrogenated diene-based polymer has a viscosity, in terms of a solution viscosity of a 5 mass% solution in toluene at 30°C, of preferably 5 mPa more, and more preferably 10 mPa more. If the toluene solution viscosity, which is a substitution index of molecular weight, is less than 5 mPa the mechanical strength of the resulting thermoplastic elastomer composition tends to decrease.

As the hydrogenated diene-based polymer, a hydrogenated styrene-butadiene block copolymer and a hydrogenated styrene-butadiene-isoprene block copolymer are preferable.

These hydrogenated diene-based polymers can be easily produced by a known method, for example, a method disclosed in Japanese Patent Application-Laid-open No. 02-36244, which comprises producing a polymer before hydrogenation by living anionic polymerization of a conjugated diene compound and a vinyl aromatic compound, and the like, and hydrogenating this polymer in the presence of a catalyst.

An initiator such as an organolithium compound, an organosodium compound, and the like are usually used in the living anionic polymerization. As the organolithium compound, alkyl lithium compounds such as n-butyl lithium, sec-butyl lithium, and t-butyl lithium can be preferably used. As examples of the solvent used for polymerization, hydrocarbon solvents such as hexane, heptane, methylcyclopentane, cyclohexane, benzene, toluene, xylene, 2-methylbutene-1, 2-methylbutene-2, and the like can be given. Either a batch process or a continuous process can be used for the living anionic polymerization at a temperature usually in the range of 0 to 120°C.

In the living anionic polymerization, the percentage of the number of conjugated diene units having the olefinic unsaturated bonds on the side chain of the hydrogenated block copolymer for the total number of conjugated diene units can be easily controlled by using an ether, a tertiary amine, an alkoxide, a phenoxide, and a sulfonate of alkali metal (sodium, potassium, etc.), and the like, in particular, by appropriately selecting the type and amount of these compounds used in the polymerization reaction.

Furthermore, the molecular weight of a polymer can also be increased by a coupling reaction or a crosslinking reaction by adding a polyfunctional coupling agent or a crosslinking agent immediately before the living anionic polymerization.

As the coupling agent, divinylbenzene, 1,2,4-trivinylbenzene, epoxidized 1,2-polybutadiene, epoxidized soybean oil, epoxidized linseed oil, benzene-1,2,4-triisocyanate, diethyl oxalate, diethyl malonate, diethyl adipate , dioctyl adipate, dimethyl phthalate, diethyl phthalate, diethyl terephthalate, diethyl carbonate, 1,1,2,2-tetrachloroethane, 1,4-bis(trichloromethyl)benzene, trichlorosilane, methyltrichlorosilane, butyltrichlorosilane, tetrachlorosilane, (dichloromethyl)trichlorosilane, hexachlorodisilane, tetraethoxysilane, tetrachlorotin, 1,3-dichloro-2-propanon, and the like can be given. Of these, divinylbenzene, epoxidized 1,2-polybutadiene, trichlorosilane, methyltrichlorosilane, and tetrachlorosilane are preferable.

As the crosslinking agent, divinylbenzene, adipic acid diester, epoxidized liquid butadiene, epoxidized soybean oil, epoxidized linseed oil, tolylene diisocyanate, diphenylmethane diisocyanate, 1,2,4-benzenetriisocyanate, and the like can be given.

The polymer before hydrogenation obtained in this manner is reacted in a hydrocarbon solvent, for example, in the presence of a hydrogenation catalyst at a temperature from -10 to 150°C under hydrogen at a pressure of 1 to 100 $kg/cm^2$ to obtain a desired hydrogenated diene-based polymer.

As the hydrogenation catalyst, a compound containing a metal element selected from the elements in groups

Ib, IVb, Vb, VIb, VHb, and VIM of the periodic table, such as Ti, V, Co, Ni, Zr, Ru, Rh, Pd, Hf, Re, Pt, and the like can be used. As examples of such a compound, metallocene compounds containing an element such as Ti, Zr, Hf, Co, Ni, Pd, Pt, Ru, Rh, Re, or the like, a carrier-type heterogeneous catalyst comprising a carrier such as carbon, silica, alumina, or diatomaceous earth carrying a metal such as Pd, Ni, Pt, Rh, Ru or the like thereon, a homogeneous Ziegler-type catalyst in which an organic salt or an acetylacetone salt of an element such as Ni, Co, or the like is combined with a reducing agent such as organoaluminum, an organometallic compound or complex ofRu, Rh, or the like, fullerene, carbon nanotube, and the like occluding hydrogen, and the like can be given. These catalysts may be used either individually or in combination of two or more. Of the above catalysts, a metallocene compound containing an element selected from Ti, Zr, Hf, Co, and Ni, and a metallocene compound containing an element selected from Ti, Zr, and Hf, which are usable in a homogeneous-system hydrogenation reaction in an inert organic solvent, are preferable. In addition, an inexpensive and industrially useful hydrogenation catalyst obtained by reacting a titanocene compound with an alkyl lithium is also preferable.

After hydrogenation, the hydrogenated diene-based polymer generated from the reaction solution is isolated by removing the catalyst residue, as required, or by adding a phenol-based or an amine-based aging preventive. Isolation of the hydrogenated diene polymer can be carried out, for example, using a method of precipitating the polymer by adding acetone or an alcohol, a method of adding the reaction solution to hot water while stirring, followed by evaporation of the solvent, and the like.

The following commercially available products can be used as the hydrogenated diene polymer. For example, "SEPTON series" (preferable grades include hydrogenated styrene-butadiene-isoprene block copolymers of 4044, 4055, 4077, etc. and hydrogenated styrene-butadiene block copolymers of 8007, 8004, 8006, etc.), "HYBRAR series", etc. manufactured by Kuraray Co., Ltd.; "ToughTech series" (preferable grades include H1052, H1031, H1041, H1051, H1062, H1943, H1913, H1043, H1075, JT-90P, etc.) manufactured by Asahi-Kasei Co., Ltd.; "DYNARON series" (hydrogenated styrene-butadiene block copolymer, preferable grades include 8600, 8900, etc.) manufactured by JSR Corp.; "Kraton series" (hydrogenated styrene-butadiene block copolymer, preferable grades include G1650, G1651, G1652, G1657, etc.) manufactured by Kraton Polymers LLC.; and the like can be used.

The content of the hydrogenated diene-based type polymer [D] in the thermoplastic elastomer composition of the first embodiment of the present invention is 0.1 to 50 parts by mass, preferably 0.5 to 45 parts by mass, and more preferably 1 to 40 parts by mass of the total amount of the EAO-based copolymer [A], polyolefin-based resin [B], and mineral oil-based softening agent [C]. If the amount of the hydrogenated diene-based type polymer [D] is too great, fluidity of the resulting thermoplastic elastomer composition may be impaired. If too small, on the other hand, the mineral oil-based softening agent [C] may bleed out.

In this instance, the amount of each component in the total of the ethylene-$\alpha$-olefin-based copolymer [A], the polyolefin-based resin [B], and the mineral oil-based softening agent [C] is respectively 5 to 60 mass%, 1 to 20 mass%, and 30 to 94 mass%, preferably 10 to 58 mass%, 3 to 18 mass%, and 32 to 87 mass%, and more preferably 15 to 55 mass%, 5 to 15 mass%, and 35 to 80 mass%.

The content of the hydrogenated diene-based type polymer [D1] in the thermoplastic elastomer composition of the second embodiment of the present invention is 0.1 to 50 parts by mass, preferably 0.5 to 45 parts by mass, and more preferably 1 to 40 parts by mass of the total amount of the oil-extended rubber [X], polyolefin-based resin [B1], and mineral oil-based softening agent [C2]. If the amount of the hydrogenated diene-based type polymer [D1] is too great, fluidity of the resulting thermoplastic elastomer composition may be impaired. If too small, on the other hand, the mineral oil-based softening agent [C2] may bleed out.

The thermoplastic elastomer composition of the first embodiment and second embodiment of the present invention may comprise polymer components other than the ethylene-$\alpha$-olefin-based copolymer, polyolefin-based resin, and hydrogenated diene-based polymer. Any polymers can be used as the other polymer components without specific limitations insofar as such polymers do not impair the mechanical strength, flexibility, and the like of the resulting thermoplastic elastomer composition.

As such polymer components, ionomer resin, aminoacrylamide polymer, polyethylene maleic anhydride graft polymer, polyisobutylene, ethylene-vinyl chloride copolymer, ethylene-vinyl alcohol copolymer, ethylene-vinyl acetate copolymer, polyethylene oxide, ethylene-acrylic acid copolymer, polypropylene maleic anhydride graft polymer, polyisobutylene and maleic anhydride graft polymer thereof, chlorinated polypropylene, 4-methylpentene-1 resin, polystyrene, ABS resin, ACS resin, AS resin, AES resin, ASA resin, MBS resin, acrylic resin, methacrylic resin, vinyl chloride resin, vinylidene chloride resin, polyamide resin, polycarbonate, vinyl alcohol resin, vinyl acetal resin, fluororesin, polyether resin, polyethylene terephthalate, nitrile rubber, and hydrogenated product thereof, acrylic rubber, silicone rubber, fluororubber, isobutylene-isoprene rubber, natural rubber, chlorinated polyethylene thermoplastic elastomer, syndiotactic 1,2-polybutadiene, simple blend of olefin-based thermoplastic elastomer, in-plant-type olefin-based thermoplastic elastomer, polyvinyl chloride-based thermoplastic elastomer, polyurethane-based thermoplastic elastomer, polyester-based thermoplastic elastomer, polyamide-based thermoplastic elastomer, and fluorine-containing thermoplastic elastomer can be given. These polymers may be used either individually or in combination of two or more.

5. Additives

In addition to the above components, various additives may be added to the thermoplastic elastomer composition of the present invention. Included in such additives are an antioxidant, antistatic agent, blocking agent, seal improver, lubricant, aging preventive, stabilizers such as heat stabilizer, weather resistant agent, metal inactivator, UV absorber, light stabilizer, and copper inhibitors; an antiseptic-antifungal agent; dispersant, plasticizer, crystal nucleus agent, flame retardant, tackifier, foaming adjuvant, coloring agents such as a dye, pigment (titanium oxide, etc.), and carbon black; metal powders such as ferrite powder; glass fibers, inorganic fibers such as metal fiber; organic fibers such as carbon fiber and aramid fiber; bicomponent fiber; inorganic whiskers such as potassium titanate whisker; fillers such as glass beads, glass balloons, glass flakes, asbestos, mica, calcium carbonate, talc, wet silica, dry silica, alumina, alumina silica, calcium silicate, hydrotalcite, kaolin, diatom earth, graphite, pumice, ebo powder, cotton flock, cork powder, barium sulfate, fluororesin, polymer beads, and mixtures of these; fillers such as polyolefin wax, cellulosic powder, rubber powder, and wood powder; and low molecular weight polymers.

6. Thermoplastic elastomer composition

The thermoplastic elastomer composition of the present invention comprises an ethylene-α-olefin-based copolymer and a polyolefin-based resin dynamically treated with heat in the presence of a crosslinking agent. Specifically, the composition comprises a crosslinked ethylene-α-olefin-based copolymer and a crosslinked polyolefin-based resin. If the hydrogenated diene-based polymer is not crosslinked, the polymer may be crosslinked by a dynamic heat treatment. "Dynamic heat treatment" indicates a treatment of applying a shearing stress with heating.

Although not specifically limited, a compound which can individually crosslink the EAO-based copolymer and polyolefin-based resin or can crosslink both the EAO-based copolymer and the polyolefin-based resin by dynamic heat treatment at a temperature equal to or above the melting point of the polyolefin-based resin is preferably used as the crosslinking agent.

As specific examples of the crosslinking agent, organic peroxide, phenol-type crosslinking agent, sulfur, sulfur compound, p-quinone, derivatives of p-quinonedioxime, bismaleimide compound, epoxy compound, silane compound, amino resin, polyol crosslinking agent, polyamine, triazine compound, metallic soap, and the like can be given. These crosslinking agents can be used either individually or in combination of two or more. Of these, organic peroxide and a phenol-resin crosslinking agent are preferable.

As the organic peroxide, 1,3-bis(t-butylperoxyisopropyl)benzene, 2,5-dimethyl-2,5-bis(t-butylperoxy)hexyne-3, 2,5-dimethyl-2,5-bis(t-butylperoxy)hexene-3, 2,5-dimethyl-2,5-bis(t-butylperoxy)hexane, 2,2'-bis(t-butylperoxy)-p-isopropylbenzene, dicumyl peroxide, di-t-butyl peroxide, t-butyl peroxide, p-menthane peroxide, 1,1-bis(t-butylperoxy)-3,3,5-trimethylcyclohexane, dilauroyl peroxide, diacetyl peroxide, t-butyl peroxybenzoate, 2,4-dichlorobenzoyl peroxide, p-chlorobenzoyl peroxide, benzoyl peroxide, di(t-butylperoxy) perbenzoate, n-butyl 4,4-bis(t-butylperoxy)valerate, t-butyl peroxyisopropylcarbonate, and the like can be given. These organic peroxides can be used either individually or in combination of two or more. Of these, 1,3-bis(t-butylperoxyisopropyl)benzene, 2,5-dimethyl-2,5-di(t-butylperoxy)hexyne-3, 2,5-dimethyl-2,5-di(t-butylperoxy)hexane, α,α-bis(t-butylperoxy)diisopropylbenzene, dicumyl peroxide, and di-t-butyl peroxide are preferable.

As examples of the phenol-based crosslinking agent, a p-substituted phenol compound shown by the following general formula (I), o-substituted phenol-aldehyde condensate, m-substituted phenol-aldehyde condensate, brominated alkyl phenol-aldehyde condensate, and the like can be given. These phenol-based crosslinking agents can be used either individually or in combination of two or more. Of these, the p-substituted phenol compound is preferable.

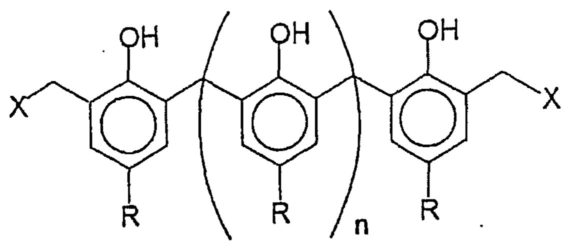

(I)

wherein X represents a hydroxyl group, a halogenated alkyl group, or a halogen atom and R represents a saturated hydrocarbon group having 1 to 15 carbon atoms, and n is an integer from 0 to 10.

The p-substituted phenol compounds can be obtained by the condensation reaction of a p-substituted phenol and an aldehyde (preferably formaldehyde) in the presence of an alkali catalyst.

The amount of the crosslinking agent used for preparing the thermoplastic elastomer composition of the present invention is preferably 0.01 to 20 parts by mass, more preferably 0.1 to 15 parts by mass, and still more preferably 1 to 10 parts by mass of the total amount of polymer components.
When an organic peroxide is used as the crosslinking agent, the amount of the organic peroxide is preferably 0.05 to 10 parts by mass, and more preferably 0.1 to 5 parts by mass. If the amount of the organic peroxide is too great, the degree of crosslinking is excessive, which may result in impaired molding processability and mechanical strength. If too small, on the other hand, the degree of crosslinking is insufficient, whereby the rubber elasticity and mechanical strength of the resulting thermoplastic elastomer composition may decrease.
When a phenol-based crosslinking agent is used, the amount of such a crosslinking agent is preferably 0.2 to 10 parts by mass, and more preferably 0.5 to 5 parts by mass. If the amount of the phenol-based crosslinking agent is too great, molding processability tends to be impaired. If too small, on the other hand, the degree of crosslinking is insufficient, whereby the rubber elasticity and mechanical strength of the resulting thermoplastic elastomer composition may decrease.

it is possible to effect a mild crosslinking reaction and cause uniform crosslinking to occur by using a crosslinking adjuvant or a crosslinking promoter together with the crosslinking agent. When an organic peroxide is used as the crosslinking agent, a crosslinking adjuvant such as sulfur or a sulfur compound (sulfur powder, colloidal sulfur, precipitated sulfur, insoluble sulfur, surface-treated sulfur, dipentamethylenethiuram tetrasulfide, etc.), an oxime compound (p-quinoneoxime, p,p'-dibenzoylquinoneoxime etc.), a polyfunctional monomer (ethylene glycol di(meth)acrylate, diethylene glycol di(meth)acrylate, triethylene glycol di(meth)acrylate, tetraethylene glycol di(meth)acrylate, polyethylene glycol di (meth)acrylate, trimethylolpropane tri(meth)acrylate, diallyl phthalate, tetraallyloxyethane, triallyl cyanulate, N,N'-m-phenylenebismaleimide, N,N'-tolylenebismaleimide, maleic anhydride, divinylbenzene, zinc di(meth)acrylate, etc.) and the like can be preferably used. These crosslinking adjuvants can be used either individually or in combination of two or more. Of these, p,p'-dibenzoylquinoneoxime, N,N'-m-phenylenebismaleimide, and divinylbenzene are preferable.
Of these, N,N'-m-phenylenebismaleimide can also function as a crosslinking agent.

When an organic peroxide is used as the crosslinking agent, the amount of the crosslinking adjuvant is preferably 10 parts by mass or less, and more preferably 0.2 to 5 parts by mass of the total amount of polymer components used for producing the thermoplastic elastomer composition. If the amount of the crosslinking adjuvant is too great, the degree of crosslinking is excessive, which may result in impaired molding processability and mechanical strength.

When a phenol-based crosslinking agent is used, a crosslinking accelerator such as a metal halide (stannous chloride, ferric chloride, etc.), an organic halide (chlorinated polypropylene, brominated isobutylene-isoprene rubber, chloroprene rubber, etc.), and the like can be used together with the crosslinking agent to control the rate of crosslinking. Use of a dispersant such as metal oxide (e.g., zinc oxide) and stearic acid in combination with the crosslinking accelerator is preferable.

The thermoplastic elastomer composition of the present invention contains a crosslinking ethylene-$\alpha$-olefin-based copolymer. The content of the ethylene-$\alpha$-olefin-based copolymer can be evaluated by the content of components insoluble in cyclohexane (cyclohexane insoluble content). Specifically, the cyclohexane insoluble content of the ethylene-$\alpha$-olefin-based copolymer contained in the thermoplastic elastomer composition at 23°C is preferably 60 mass% or more, more preferably 65 mass% or more, and still more preferably 70 mass% or more. If the cyclohexane insoluble content is less than 60 mass%, the rubber elasticity and mechanical strength may decrease. The following method is used for measuring the cyclohexane insoluble content.

<Measuring method of cyclohexane insoluble content>

A thermoplastic elastomer composition of about 200 mg is weighed and finely cut. The resulting fine pieces are dipped in 100 ml of cyclohexane in a sealed container at 23°C for 48 hours. The cyclohexane solution is then filtered. The resulting residue on the filter paper is dried in a vacuum dryer (105°C) for one hour. The value obtained by subtracting the mass of dry residue and the theoretical amount of mineral oil-based softening agent in the thermoplastic elastomer composition from the mass of the thermoplastic elastomer composition before dipping (i.e. the amount of dissolved non-crosslinking ethylene-$\alpha$-olefin-based copolymer in [A] and [A1]) is regarded as a "corrected final mass (p)".
On the other hand, the mass of ethylene-$\alpha$-olefin-based copolymer (the total of [A] and [A1]) is determined from the mass of the thermoplastic elastomer composition before dipping. The resulting value is regarded as a "corrected initial mass (q)".
The cyclohexane insoluble content, here, indicates (insoluble content in the EAO-based copolymer/the total amount of the EAO-based copolymer) and is calculated by the following formula.

$$\text{Cyclohexane insoluble content [mass\%]} = [\{\text{corrected final mass (p)}\} \div \{\text{corrected initial mass (q)}\}] \times 100$$

The durometer E hardness according to JIS K6253 of the thermoplastic elastomer composition of the present invention is preferably 80 or less, more preferably 75 or less, and still more preferably 70 or less.

7. Method for producing the thermoplastic elastomer composition

The method for producing the thermoplastic elastomer composition of the present invention is not specifically limited insofar as the method comprises an ethylene-α-olefin-based copolymer and a polyolefin-based resin which are dynamically treated with heat in the presence of a crosslinking agent.

In a common method, a raw material composition containing the ethylene-α-olefin-based copolymer, polyolefin-based resin, mineral oil-based softening agent, hydrogenated diene-based polymer, and crosslinking agent is prepared and this raw material composition is dynamically treated with heat.

Other methods such as (i) a method of preparing a raw material composition containing the ethylene-α-olefin-based copolymer (or oil-extended rubber), polyolefin-based resin, and crosslinking agent, dynamically treating this raw material composition with heat, and adding other components, (ii) a method of preparing a raw material composition containing the ethylene-α-olefin-based copolymer (or oil-extended rubber), polyolefin-based resin, hydrogenated diene-based polymer, and crosslinking agent, dynamically treating this raw material composition with heat, and adding other components, and the like can also be used.

The ethylene-α-olefin-based copolymer, polyolefin-based resin, and hydrogenated diene-based polymer used for preparing the raw material composition may be used either as is or may be used as compositions respectively containing the same or different types of additives. The ethylene-α-olefin-based copolymer may be in any form such as bales, crumbs, pellets, fine particles (including a ground product of bales or crumbs). Ethylene-α-olefin-based copolymers with different forms may be used in combination.

The amount of each component in the total of the ethylene-α-olefin-based copolymer [A], the polyolefin-based resin [B], and the mineral oil-based softening agent [C] in all raw material components (I) used for preparing the thermoplastic elastomer composition of the first embodiment is respectively 5 to 60 mass%, 1 to 20 mass%, and 30 to 94 mass%, preferably 10 to 58 mass%, 3 to 18 mass%, and 32 to 87 mass%, and more preferably 15 to 55 mass%, 5 to 15 mass%, and 35 to 80 mass%..

To produce the thermoplastic elastomer composition of the second embodiment, an oil-extended rubber [X] consisting of the ethylene-α-olefin-based copolymer [A1] and mineral oil-based softening agent [C1] is previously prepared, and this oil-extended rubber [X] is used together with other raw materials such as the crosslinking agent.

In this instance, the amount of oil-extended rubber [X], the polyolefin-based resin [B1], and the mineral oil-based softening agent [C2] in all raw material components (II) for producing the thermoplastic elastomer composition of the first embodiment is respectively 5 to 60 mass%, 1 to 20 mass%, and 30 to 94 mass%, preferably 10 to 58 mass%, 3 to 18 mass%, and 32 to 87 mass%, and more preferably 15 to 55 mass%, 5 to 15 mass%, and 35 to 80 mass%.

As an apparatus for dynamically treating with heat when preparing the thermoplastic elastomer composition, a melt kneader or the like can be used. The melt kneader may be either a continuous-type or a batch-type.

As examples of this melt kneader, an open-type mixing roll, a non-open-type Banbury mixer, a mono-axial extruder, a bi-axial extruder, a continuous-type kneader, a pressure kneader, and the like can be given. Of these, from the viewpoint of economy and process efficiency, continuous-type apparatuses such as a monoaxial extruder, a biaxial extruder, a continuous kneader, and the like are preferable. Either the same type or different types of continuous-type melt kneaders can be used in combination.

When a biaxial extruder is used, L/D (the ratio of the effective screw length L and the outer diameter D) is preferably 30 or more, and more preferably 36 to 60. As the biaxial extruder, although any biaxial extruder in which the two screws gear or do not gear can be used, a biaxial extruder in which the two screws rotate in the same direction and gear is preferred.

As such biaxial extruders, "PCM" manufactured by Ikegai, Ltd., "KTX" manufactured by Kobe Steel, Ltd., "TEX" manufactured by The Japan Steel Works, Ltd., "TEM" manufactured by Toshiba Machine Co., Ltd., "ZSK" manufactured by Werner & Pfleiderer Corp., and the like can be given.

When the continuous-type kneader is used, L/D (the ratio of the effective screw length L and the outer diameter D) is preferably 5 or more, and more preferably 10 or more.

As such continuous-type kneaders, "Mixtron KTX-LCM-NCM" manufactured by Kobe Steel, Ltd., "CIM-CMP" manufactured by The Japan Steel Works, Ltd., and the like can be given.

The temperature of the dynamic heat treatment is usually from 120 to 350°C, and preferably from 150 to 290°C. The treating time is usually from 20 seconds to 320 minutes, and preferably from 30 seconds to 25 minutes. The shearing

stress applied to the mixture is from 10 to 20,000/sec, and preferably from 100 to 10,000/sec, in terms of shear rate.

The thermoplastic elastomer composition obtained in the manner as described above has a low hardness, particularly durometer E and durometer A, is flexible, and has superior rubber elasticity. Therefore, these excellent characteristics can be utilized according to objects and applications by using even a molded article made only from the thermoplastic elastomer composition. As a method for molding a molded article from the thermoplastic elastomer composition of the present invention, an extrusion molding method, calender method, solvent cast method, injection molding method, vacuum molding method, powder slash molding method, heat-pressing method, and the like can be given.

8. Molded article

The molded article of the present invention is characterized by being formed from the thermoplastic elastomer composition of the present invention.

The molded article of the present invention can be fabricated into composite products by means such as lamination, joining, and the like with parts and the like which are made from other materials.

As examples of the other materials, rubbers, resins, thermoplastic elastomer compositions other than that of the present invention, metals (alloys), glass, cloth, wood, and the like can be given.

As examples of the rubbers and resins, those described as the other polymer components that can be incorporated into the thermoplastic elastomer composition of the present invention can be given.

As the metals (alloys), stainless steel, aluminum, iron, copper, nickel, zinc, lead, and tin, as well as nickel-zinc alloy, iron-zinc alloy, lead-tin alloy which are used in vehicles, marine vessels, home electronic appliances, and the like can be given.

9. Sealing material made from thermoplastic elastomer composition

Among the thermoplastic elastomer compositions of the present invention, those having a durometer A hardness according to JIS K6253 of 40 or less, preferably 35 or less, more preferably 30 or less, and particularly preferably 22 or less can be used as a sealing material. In addition, the thermoplastic elastomer composition has a compression set (measured at 70°C for 22 hours) according to JIS K6262 of preferably 40% or less, more preferably 38% or less, and still more preferably 35% or less. The sealing material in which the thermoplastic elastomer composition having these characteristics is used exhibits outstanding sealing properties, is free from bleeding-out of the mineral oil-based softening agent, and can be recycled with ease due to the recyclable properties of the thermoplastic elastomer composition. The sealing material is thus a superior resource saving material.

As a method for molding the sealing material made from the thermoplastic elastomer composition of the present invention, an extrusion molding method, calender method, solvent cast method, injection molding method, vacuum molding method, powder slash molding method, heat-pressing method, and the like can be given.

The form of the sealing material is not specifically limited. For example, an O-ring, sheet, rod, and the like can be given. In addition, the sealing material can be used also as a plug.

The sealing material of the present invention can be formed into a sealing part, which may be fabricated into a composite product by means such as lamination, joining, and the like with a box or the like made from another material, to be used as a container for a toner case for a copying machine, printer, and the like. As examples of the other materials, rubbers, resins, thermoplastic elastomer compositions other than that of the present invention, metals (alloys), glass, cloth, wood, and the like can be given.

When a container or the like is manufactured, although the above-described various materials can be used as the material of the box, use of a recyclable material is preferable. Especially, the box part made from a thermoplastic resin and/or a thermoplastic elastomer composition is preferable due to the capability of being recycled and easy processability.

As the thermoplastic resin, thermoplastic elastomer, and thermoplastic elastomer composition for recyclable boxes, polymer components with thermoplastic properties among polymers exemplified as other polymer components in the description of raw material compositions used for forming the thermoplastic elastomer composition can be preferably used. As such polymer components, ionomer resin, aminoacrylamide polymer, polyethylene and maleic anhydride graft polymer thereof, polyisobutylene, ethylene-vinyl chloride copolymer, ethylene-vinyl alcohol copolymer, ethylene-vinyl acetate copolymer, polyethylene oxide, ethylene-acrylic acid copolymer, polypropylene and maleic anhydride graft polymer thereof, polyisobutylene and maleic anhydride graft polymer thereof, chlorinated polypropylene, 4-methylpentene-1 resin, polystyrene, ABS resin, ACS resin, AS resin, AES resin, ASA resin, MBS resin, acrylic resin, methacrylic resin, vinyl chloride resin, vinylidene chloride resin, polyamide resin, polycarbonate, vinyl alcohol resin, vinyl acetal resin, fluororesin, polyether resin, polyethylene terephthalate, chlorinated polyethylene thermoplastic elastomer, syndiotactic 1,2-polybutadiene, simple blend of olefin-based thermoplastic elastomer, in-plant-type olefin-based thermoplastic elastomer, dynamically crosslinking olefin-based thermoplastic elastomer, polyvinyl chloride-based thermoplastic elastomer, polyurethane-based thermoplastic elastomer, polyester-based thermoplastic elastomer, polyamide-based thermoplastic elastomer, and fluorine-containing thermoplastic elastomer can be given. These polymer components may be used either individually or in combination of two or more.

In addition, if an olefin-based material with good compatibility with the sealing material is selected as a material of the box, a container in which the box part and the sealing part are heat-sealed can be obtained. On the other hand,

if a material with poor compatibility with the sealing material, such as a thermoplastic resin containing a functional group, is selected as a material of the box, the sealing part and the box part can be combined without fusion-bonding.
Specifically, polypropylene and polyethylene can be given as materials for the box part having good compatibility with the sealing material, and ABS resin, polycarbonate, and polystyrene can be given as materials for the box part having poor compatibility with the sealing material.
As the material of the container of the present invention, in addition to the thermoplastic resin and thermoplastic elastomer composition, metals (alloys), glass, cloth, wood, and the like can also be used. As examples of the metals (alloys), stainless steel, aluminum, iron, copper, nickel, zinc, lead, and tin, as well as nickel-zinc alloy, iron-zinc alloy, lead-tin alloy which are used in vehicles, marine vessels, home electronic appliances, and the like can be given.

The sealing material of the present invention can be formed into a sealing part, preferably by injection molding together with a box part, thereby obtaining a container (a box part with a sealing part combined therewith). The sealing part made of the sealing material of the present invention can exhibit remarkably excellent sealing performance when storing fine particles such as toner and liquid in the container.

As the method for producing a composite product by injection molding, a core backing method, a die sliding method, or a rotary method, in which a resin with two or more different colors or two or more different types of resins are sequentially injected from separate injection cylinders into a die to mold a molded article comprising different materials or a material with different colors, can be given. A multilayer or multicolor molded article can be produced by injecting two or more times.

The rotary method refers to a method of injection molding of a composite molded article comprising injecting and forming a first material (or a first color material) from a first cylinder, opening the die, rotating the die rotaion disk 180° and closing the die while having the first molded article be attached to the core side, injecting and forming a second material (or a second color material) from a second cylinder, opening the die again, and removing the molded article.

The core backing method consists of a primary molding stage and a secondary molding stage. During the primary molding stage, parts of cavities are sealed with moving cores, while open cavities are filled with a molten resin by injection to mold a primary half-molded article, and during the second molding stage, the moving cores are evacuated and the molten resin is injected to the evacuated space to obtain a molded article integrated with the primary half-molded article.

Among the injection molding methods, a die slide injection (DSI) can be given as a preferable molding method for producing a container in which the sealing material of the present invention is used. A brief explanation of the DSI method is as follows.
First, primary formed objects (half bodies of a hollow article) is molded by a primary injection, while closing the die. Then, the die is opened with the primary formed objects being left in the cavity. The die has a structure movable by a die sliding mechanism provided in the injection molding machine. Using this mechanism, the die is moved to the position in which the primary formed objects face each other vis-a-vis. The die is closed again and the resin is secondarily injected in the form of a head band so that the seam of the primary formed objects may be covered with the resin. The above method of molding hollow molded articles is described in, for example, Plastics Age "Development of hollow injection-molding technology by DSI" (Aug., 2002, p 74-84) and JP-A-62-87315.

## EXAMPLES

The present invention will now be described in more detail by way of examples. However, these examples should not be construed as limiting the present invention. In the examples, "%" and "part(s)" means "mass%" and "part (s) by mass" unless otherwise indicated.

Example 1

1. Preparation of thermoplastic elastomer composition

An oil-extended rubber (I) containing an ethylene-α-olefin-based copolymer shown below and a mineral oil-based softening agent ("Diana Process Oil PW380", hydrogenation paraffin-type mineral oil, manufactured by Idemitsu Kosan Co., Ltd.) at a ratio shown in Table 1 was prepared. A raw material composition was prepared by mixing the oil-extended rubber (I), a polyolefin-based resin shown below, the above mineral oil-based softening agent, a hydrogenated diene-based polymer, and various additives, excluding a crosslinking agent and crosslinking adjuvant, at a ratio shown in Table 2. The raw material composition was added to a pressure kneader (volume: 101, manufactured by Moriyama Co., Ltd.) which was previously heated to 150°C and kneaded at 40 rpm (shear rate: 200/sec) for 15 minutes until the polyolefin-based resin was melted and each component homogeneously dispersed. The resulting molten kneaded product was palletized using a feeder ruder (manufactured by Moriyama Co., Ltd.).
The pellets, a crosslinking agent, and a crosslinking adjuvant were added to a Henschel mixer at a ratio shown in Table 2 and mixed for 30 seconds. The mixture was extruded from a biaxial extruder (a unidirectional complete gear-type

screw, the ratio of the screw flight length (L) to the screw diameter (D), L/D = 33.5, "PCM45 type" manufactured by Ikegai, Ltd.) while dynamically treating with heat at 200°C for one minute and 30 seconds at a rotation rate of 300 rpm and shear rate of 400/s to obtain pellets of the thermoplastic elastomer composition.

(1) Ethylene-$\alpha$-olefin-based copolymer

(I) Ethylene-propylene-5-ethylidene-2-norbornene ternary copolymer
Ethylene monomer unit: 66 mol%, 5-ethylidene-2-norbornene monomer unit: 4.5 mol%, limiting viscosity (at 135°C in decalin): 5.5 dl/g
(II) Ethylene-propylene-5-ethylidene-2-norbornene ternary copolymer
Ethylene monomer unit: 66 mol%, 5-ethylidene-2-norbornene monomer unit: 4.5 mol%, limiting viscosity (at 135°C in decalin): 2.7 dl/g

(2) Polyolefin-based resin

(I) Crystalline polypropylene
"Novatech FL25R" manufactured by Japan Polychem Corp. (density: 0.90 g/cm$^3$, MFR = 23 g/10 minutes (temperature: 230°C, load: 2.16 kg)) was used.
(II) Propylene-1-butene amorphous copolymer
"UBETAC APAO UT 2780" manufactured by Ube Rexene Corp. (propylene monomer unit; 71 mol%, melt viscosity: 8,000 cPs, density: 0.87 g/cm$^3$, crystallinity by X-ray diffraction: 0%, polystyrene-reduced number average molecular weight by GPC:
Mn = 6,500) was used.

(3) Hydrogenated diene-based polymer

(I) Styrene-butadiene-isoprene hydrogenated diene polymer
"Septon 4077" manufactured by Kuraray Co., Ltd. (styrene monomer unit: 30 mol%, specific gravity: 0.91, hydrogenation rate: 98%, toluene solution viscosity (30°C, concentration: 5 mass%): 300 mPa·s, melt flow rate (230°C, 21.2 N): did not flow and could not be measured) was used.
(II) Styrene-butadiene hydrogenated diene polymer
"Septon 8006" manufactured by Kuraray Co., Ltd. (styrene monomer unit: 30 mol%, specific gravity: 0.91, hydrogenation rate: 98%, toluene solution viscosity (30°C, concentration: 5 mass%): 42 mPa·s, melt flow rate (230°C, 21.2 N): did not flow and could not be measured) was used.
(III) Styrene-butadiene hydrogenated diene polymer
"G1651" manufactured by Kraton Polymers LLC. (styrene monomer unit: 33 mol%, specific gravity: 0.91, hydrogenation rate: 99%, toluene solution viscosity (30°C, concentration: 5 mass%): 50 mPa·s, melt flow rate (230°C, 21.2 N): did not flow and could not be measured) was used.

(4) Additive

(i) Crosslinking agent
"Perhexa 25B-40" manufactured by NOF Corp. (5-dimethyl-2,5-di(t-butylperoxy)hexane) was used.
(ii) Crosslinking adjuvant
Divinylbenzene manufactured by Nippon Steel Chemical Co., Ltd. (purity: 96%) was used.
(iii) Aging preventive
"Irganox 1010" manufactured by Ciba Specialty Chemicals Co., Ltd. (tetrakis[methylene-3-(3,5-di-tert-butyl-4-hydroxyphenyl)propionate]methane) was used.

[Table 1]

| | | | | Oil-extended rubber | |
|---|---|---|---|---|---|
| | | | | (I) | (II) |
| Component (Part) | Ethylene-$\alpha$-olefin-based copolymer | Limiting viscosity (dl/g) | | | |
| | | (I) | 5.5 | 50 | |
| | | (II) | 2.7 | | 60 |
| | Mineral oil-based softening agent | | | 50 | 40 |

2. Evaluation of thermoplastic elastomer composition

Pellets of the thermoplastic elastomer composition obtained above were processed by an injection molding machine ("N-100" manufactured by The Japan Steel Works, Ltd.) to produce a sheet (test specimen) with a length of 120 mm, width of 120 mm, and thickness of 2 mm. The sheet was used for various evaluations. The results are shown in Table 2.

(1) Melt flow rate (MFR)
MFR was measured according to JIS K7210 at 190°C and a load of 21 N.
(2) Cyclohexane insoluble content
Measured at 23°C according to the method described above.
(3) Hardness (durometer E)
Measured according to JIS K6253. The hardness 5 seconds after the start of measurement was used as the index for flexibility.
(4) Hardness (durometer A)
Measured according to JIS K6253. The durometer A hardness 5 seconds after the start of measurement was used as the index for flexibility.
(5) Tensile breaking strength and tensile breaking elongation
Measured according to JIS K6251.
(6) Compression set
The compression set measured according to JIS K6262 at 70°C for 22 hours was used as the standard for rubber elasticity.
(7) Rebound resilience
Measured in accordance with JIS K6255 using a Lubke's rebound resilience tester at 23°C. The result was used as the index for rubber elasticity.
(8) Appearance of molded article (bleed test of mineral oil-based softening agent)
40 mm x 30 mm rectangular test specimens were punched from the above sheet. After allowing to stand in a thermostat bath at 5°C for 168 hours to inspect the outward appearance by the naked eye. The results were evaluated according to the following criteria.
Good: No bleed-out of the mineral oil-based softening agent
Bad: Bleed-out of the mineral oil-based softening agent was observed

[Table 2]

| | | | Example 1 | Example 2 | Example 3 | Comparative Example 1 | Comparative Example 2 | Comparative Example 3 |
|---|---|---|---|---|---|---|---|---|
| Raw material component (part) | Oil-extended rubber | (I) | 47 | 47 | 35 | 47 | | 47 |
| | | (II) | | | | | 47 | |
| | Polyolefin-based resin | (I) | 4 | 4 | 3 | 4 | 4 | 4 |
| | | (II) | 4 | 4 | 3 | 4 | 4 | 4 |
| | Mineral oil-based softening agent | | 45 | 45 | 59 | 45 | 45 | 45 |
| | Hydrogenated diene-based polymer | (I) | 5 | | | | 5 | |
| | | (II) | | 5 | | | | |
| | | (III) | | | 25 | | | |
| | Crosslinking agent | | 0.8 | 0.8 | 0.8 | 0.8 | 0.8 | |
| | Crosslinking adjuvant | | 0.6 | 0.6 | 0.6 | 0.6 | 0.6 | |
| | Aging preventive | | 0.1 | 0.1 | 0.1 | 0.1 | 0.1 | 0.1 |
| | Total amount of mineral oil based softening agent in composition | | 68.5 | 68.5 | 76.5 | 44 | 68 | 68.5 |
| Presence or absence of dynamic crosslinking | | | Present | Present | Present | Present | Present | Absent |
| Properties | MFR (190°C, 21N [g/10 min]) | | 8 | 10 | 8 | 16 | 5 | 1 |
| | Cyclohexane insoluble content [%] | | 87 | 85 | 86 | 81 | 84 | 29 |
| | Hardness (durometer E) | | 55 | 54 | 55 | 53 | 59 | 53 |
| | Hardness (durometer A) | | 26 | 22 | 24 | 19 | 22 | 19 |
| | Tensile breaking strength [MPa] | | 2.1 | 2 | 2.7 | 1.9 | 1.4 | 0.8 |
| | Tensile breaking elongation [%] | | 770 | 750 | 780 | 720 | 740 | 930 |
| | Compression set [%] | | 29 | 33 | 19 | 37 | 37 | 90 |
| | Rebound resilience [%] | | 57 | 57 | 68 | 57 | 56 | 55 |
| | Appearance of molded article | | Good | Good | Good | Bad | Bad | Bad |

Examples 2-3 and Comparative Examples 1-2
Thermoplastic elastomer compositions were prepared and evaluated in the same manner as in Example 1, except for using raw material components at proportions shown in Table 2. The results are shown in Table 2.
For Comparative Example 2, the oil-extended rubber (II) shown in Table 1 was prepared in the same manner as in Example 1. The raw material composition was obtained by mixing this oil-extended rubber (II) with other raw material components at a proportion shown in Table 2.

Comparative Example 3

The raw material composition was obtained by mixing the oil-extended rubber (I) with other raw material components at a proportion shown in Table 2. The raw material composition was added to a pressure kneader (volume: 101, manufactured by Moriyama Co., Ltd.) which was previously heated to 150°C and kneaded at 40 rpm (shear rate: 200/sec) for 15 minutes until the polyolefin-based resin was melted and each component homogeneously dispersed. The resulting molten kneaded product was palletized using a feeder ruder (manufactured by Moriyama Co., Ltd.) to produce a thermoplastic elastomer composition. The thermoplastic elastomer composition was evaluated. The results are shown in Table 2.
The results of Table 2 show that Comparative Example 1, which is an example not containing a hydrogenated

diene-based polymer, exhibited bleed-out of the mineral oil-based softening agent from the surface of the molded article and an impaired outward appearance. Comparative Example 2, in which the composition contains a hydrogenated diene-based polymer, but the ethylene-$\alpha$-olefin-based copolymer has a limiting viscosity of less than 3.5 dl/g, exhibited bleed-out of the mineral oil-based softening agent and an impaired outward appearance. The composition of Comparative Example 3 which was not dynamically crosslinked exhibited insufficient mechanical strength due to poor tensile characteristics, high compression set, bleed-out of the mineral oil-based softening agent, and an impaired outward appearance.

On the other hand, it can be seen that the thermoplastic elastomer composition of Examples 1-3 exhibited excellent flexibility due to very low hardness, i.e. durometer E hardness of 54 to 55 and durometer A hardness of 22 to 26. In addition, the compression set of 29 to 33% was very small and the rebound resilience of 57 to 68% was sufficiently high, indicating superior rubber elasticity. In addition, all these compositions exhibited no bleed-out of the mineral oil-based softening agent and an excellent outward appearance.

Examples 4-5 and Comparative Examples 4-5

1. Production of thermoplastic elastomer composition

The oil-extended rubber (X), polyolefin-based resin, mineral oil-based softening agent, hydrogenated diene-based polymer, and additives (excluding a crosslinking agent and crosslinking adjuvant) shown below were mixed at a ratio shown in Table 3 and palletized in the same manner as in Example 1.

The pellets, crosslinking agent, and crosslinking adjuvant were put into a Henschel mixer at a ratio shown in Table 3 and mixed for 30 seconds, followed by extrusion using a biaxial extruder while being dynamically heated in the same manner as in Example 1, thereby obtaining three-types of thermoplastic elastomer compositions (A, B, C) in the form of pellets.

(1) Oil-extended rubber (X)

Oil extended copolymer rubber 1: Ethylene/propylene/5-ethylidene-2-norbomene ternary copolymer (ethylene content: 66 mol%, 5-ethylidene-2-norbornene content: 4.5 mol%, limiting viscosity: 5.5 dl/g): 50 mass%, paraffin-based softening agent: 50 mass%.

(2) Polyolefin-based resin

(I) Crystalline polypropylene

"Novatech FL25R" manufactured by Japan Polychem Corp. (density: 0.90 g/cm$^3$, MFR = 23 g/10 minutes (temperature: 230°C, load: 2.16 kg)) was used.

(II) Propylene 1-butene amorphous copolymer

"UBETAC APAO UT 2780" manufactured by Ube Rexene Corp. (propylene monomer unit; 71 mol%, melt viscosity: 8,000 cPs, density: 0.87 g/cm$^3$, crystallinity by X-ray diffraction: 0%, polystyrene-reduced number average molecular weight by GPC: Mn = 6,500) was used.

(3) Mineral oil-based softening agent

"Diana Process Oil PW-90" manufactured by Idemitsu Kosan Co., Ltd. (paraffin-based mineral oil) was used.

(4) Hydrogenated diene-based polymer

(I) Styrene-butadiene-isoprene hydrogenated diene polymer

"Septon 4077" manufactured by Kuraray Co., Ltd. (styrene monomer unit: 30 mol%, specific gravity: 0.91, hydrogenation rate: 98%, toluene solution viscosity (30°C, concentration: 5 mass%): 300 mPa·s, melt flow rate (230°C, 21.2 N): did not flow and could not be measured) was used.

(5) Additives

(i) Crosslinking agent

"Perhexa 25B-40" manufactured by NOF Corp. (5-dimethyl-2,5-di(t-butylperoxy)hexane) was used.

(ii) Crosslinking adjuvant

Divinylbenzene manufactured by Nippon Steel Chemical Co., Ltd. (purity: 96%) was used.

(iii) Aging preventive

"Irganox 1010" manufactured by Ciba Specialty Chemicals Co., Ltd. (tetrakis[methylene-3-(3,5-di-tert-butyl-4-hydroxyphenyl)propionate]methane) was used.

[Table 3]

| | | | A | B | C |
|---|---|---|---|---|---|
| Component (part) | Oil-extended rubber | (I) | 45 | 47 | 75 |
| | Polyolefin-based resin | (I) | 5 | 4 | 6 |
| | | (II) | 5 | 4 | 6 |
| | Mineral oil-based softening agent | | 40 | 45 | 13 |
| | Hydrogenated diene-based polymer | (I) | 5 | | |
| | Crosslinking agent | | 0.8 | 0.8 | 0.8 |
| | Crosslinking adjuvant | | 0.6 | 0.6 | 0.6 |
| | Aging preventive | | 0.1 | 0.1 | 0.1 |
| Properties | Cyclohexane insoluble content | [%] | 85 | 87 | 86 |
| | MFR (190°C, 21 N) | [g/10 min] | 6 | 22 | |
| | MFR (230°C, 49 N) | [g/10 min] | | | 41 |
| | Hardness (durometer A) | | 20 | 22 | 42 |
| | Tensile breaking strength | [MPa] | 2.7 | 2.8 | 4.2 |
| | Tensile breaking elongation | [%] | 700 | 650 | 740 |
| | Compression set | [%] | 33 | 34 | 38 |
| | Oil bleeding | | Good | Good | Good |

2. Evaluation of thermoplastic elastomer composition
Pellets of the three thermoplastic elastomer compositions obtained above were processed by an injection molding machine ("N-100" manufactured by The Japan Steel Works, Ltd.) to produce a sheet (test specimen) with a length of 120 mm, width of 120 mm, and thickness of 2 mm. The sheet was used for various evaluations. The results are shown in Table 3.

(1) Oil bleeding
The test sheet was allowed to stand at 80°C for 72 hours and oil bleeding was evaluated by naked eye observation.
Good: No bleed-out of the mineral oil-based softening agent
Bad: Bleed-out of the mineral oil-based softening agent was observed

3. Fabrication of container with a sealing part
A container with a sealing part was fabricated by a die slide injection molding method ("M-DSI® method") using an injection molding machine for two-color molding ("220 EII-P2M" manufactured by The Japan Steel Works, Ltd.). After molding a box body from polystyrene ("H230" grade manufactured by Japan Polystyrene Inc.) at a cylinder temperature of 210°C and a die temperature of 50°C, the sealing part was continuously molded using the thermoplastic elastomer composition at a cylinder temperature of 210°C and a die temperature of 50°C to obtain a container with a sealing part. Figure 1 shows the container 10 with a sealing part obtained and Figure 2 is a photograph of the container 10 with the sealing part, in which a sealing part 1 made from a low hardness seal material of the present invention and the container body 2 are shown separated from each other.

4. Sealing performance evaluation method

<Test method>

As shown in Figure 3, a container (two-color molded article) 10 with a sealing material fabricated in 3 above was filled with water 15 up to 90% level. A lid 11 was put on this container 10 and the ends were clipped using double clips ("kuri-34" manufactured by Kokuyo Co., Ltd., mouth width: 25 mm) 12 (eight pieces). 14 indicates packing. This container 10 was dropped from the height of 1 m onto a corrugated paper board 13 to inspect water leakage from the container 10. Each sample was dropped five times (n = 5), each time at a different direction. The results are shown in

Table 4.
[Table 4]

| | Example | | | | Comparative Example | | |
|---|---|---|---|---|---|---|---|
| | 4 | | 5 | | 4 | | 5 |
| Thermoplastic elastomer composition | A | | B | | C | | No seal material |
| n | 1 | 2 | 1 | 2 | 1 | 2 | 1 |
| 1 | Good | Good | Good | Good | Good | Good | Bad |
| 2 | Good | Good | Good | Good | Good | Bad | Bad |
| 3 | Good | Good | Good | Good | Bad | Good | Bad |
| 4 | Good | Good | Good | Good | Good | Bad | Bad |
| 5 | Good | Good | Good | Good | Bad | Good | Bad |
| Toner leakage rate (%) | 0 | | 0 | | 80 | | 100 |
| Good: No leakage Bad: Leakage occurred | | | | | | | |

(Evaluation results)
As can be seen from the results of Table 4, the low hardness sealing materials of the present invention (thermoplastic elastomer compositions A and B) exhibited good sealing performance without leaking water. On the other hand, the sealing materials made from the thermoplastic elastomer composition with a hardness of more than 40 had only poor sealing performance.

INDUSTRIAL APPLICABILITY

Due to excellent flexibility and rubber elasticity (rebound resilience and compression set), the thermoplastic elastomer composition of the present invention can be widely used for interior or exterior covering materials of vehicles such as bumpers, exterior moldings, window seal gaskets, door seal gaskets, trunk seal gaskets, roof side rails, emblems, inner panels, door trims, console boxes, and the like; weather stripping and the like; and scratch resistant leather seats; sealing materials, interior or exterior covering materials, and the like for airplanes and vessels; sealing materials, interior or exterior covering materials, water-proof sheets, and the like for civil engineering and construction works; sealing materials and the like for general-purpose machines and apparatuses; packing of light electrical equipment or civil water pipes; sealing materials, covering materials, housing materials, or the like for fuel cell stacks; railroad track pads; rolls in information machines and equipment; cleaning blades; films for electronic components; protection films and sealing materials used for semiconductors and in a manufacturing process of flat panel displays (FPD) such as liquid crystal displays; overcoats for picture images such as a photograph; makeup films for building materials; common finished goods such as medical instruments and parts thereof, electric wires, daily-use products, and sporting goods; and the like.
In addition, the low hardness sealing material of the present invention, which can be molded and processed by injection molding, extrusion molding, hollow molding, compression molding, vacuum forming, laminate molding, calender molding, and the like, exhibits remarkably low hardness, superior sealing performance, no bleeding-out of a mineral oil-based softening agent, and a small compression set. The sealing material of the present invention is thus suitably used as a sealing material for general-purpose machines and equipment. In addition, since the sealing material is formed from the thermoplastic elastomer composition, the sealing material can be recycled and is a very excellent material from the viewpoint of global environment preservation and resource saving.
The container integrally made from this low hardness sealing material and a box main body material by two-color injection molding can perfectly prevent leakage of various contents contained therein and can be safely used during transportation.

**Claims**

**1.** A thermoplastic elastomer composition comprising the following components [A], [B], [C], and [D]:

[A] 5 to 60 mass% of an ethylene-α-olefin-based copolymer having a limiting viscosity of 3.5 dl/g or more

measured in a decalin solvent at 135°C,
[B] 1 to 20 mass% of a polyolefin-based resin, and
[C] 30 to 94 mass% of a mineral oil-based softening agent, provided that the total of the components [A], [B], and [C] is 100 mass%, and for 100 parts by mass of the components [A], [B], and [C],
[D] 0.1 to 50 parts by mass of a hydrogenated diene-based polymer,
at least [A] the ethylene-α-olefin-based copolymer and [B] the polyolefin-based resin being dynamically treated with heat in the presence of a cross-linking agent.

2. A thermoplastic elastomer composition comprising the following components [X], [B1], [C2], and [D1]:

[X] 5 to 60 mass% of an oil-extended rubber comprising [A1] 20 to 80 mass% of an ethylene-α-olefin-based copolymer having a limiting viscosity of 3.5 dl/g or more measured in a decalin solvent at 135°C and [C1] 20 to 80 mass% of a mineral oil-based softening agent, provided that the total of [A1] and [C1] is 100 mass%,
[B1] 1 to 20 mass% of a polyolefin-based resin, and
[C2] 30 to 94 mass% of a mineral oil-based softening agent, provided that the total of [X], [B1], and [C2] is 100 mass%, and for 100 parts by mass of the components [X], [B1], and [C2],
[D1] 0.1 to 50 parts by mass of a hydrogenated diene-based polymer,
at least [A1] the ethylene-α-olefin-based copolymer and [B1] the polyolefin-based resin being dynamically treated with heat in the presence of a crosslinking agent.

3. The thermoplastic elastomer composition according to claim 1 or 2, wherein the hydrogenated diene-based polymer [D] is at least one polymer selected from the group consisting of hydrogenated products of polymers comprising a monomer unit of a conjugated diene compound and hydrogenated products of polymers comprising a monomer unit of a conjugated diene compound and a monomer unit of a vinyl aromatic compound.

4. The thermoplastic elastomer composition according to any one of claims 1 to 3, wherein the thermoplastic elastomer composition has a durometer E hardness according to JIS K6253 of 80 or less.

5. The thermoplastic elastomer composition according to any one of claims 1 to 4, wherein the amount of ethylene monomer unit constituting the ethylene-α-olefin-based copolymer of [A] and [A1] is 35 to 95 mol% of the total monomer units consisting of the ethylene monomer unit and a monomer unit of an α-olefin compound.

6. The thermoplastic elastomer composition according to any one of claims 1 to 5, wherein the mineral oil-based softening agent of [C], [C1], and [C2] is a paraffin-based mineral oil.

7. The thermoplastic elastomer composition according to any one of claims 1 to 6, wherein the crosslinking agent is an organic peroxide selected from the group consisting of 1,3-bis(t-butylperoxyisopropyl)benzene, 2,5-dimethyl-2,5-di(t-butylperoxy)hexyne-3, 2,5-dimethyl-2,5-di(t-butylperoxy)hexane, α,α-bis(t-butylperoxy)diisopropylbenzene, dicumyl peroxide, and di-t-butyl peroxide.

8. The thermoplastic elastomer composition according to any one of claims 1 to 7, wherein the ethylene-α-olefin-based copolymer in the thermoplastic elastomer composition has a cyclohexane insoluble content at 23°C of 60 mass% or more.

9. A molded article made from the thermoplastic elastomer composition according to any one of claims 1 to 8.

10. A sealing material with low hardness made from the thermoplastic elastomer composition according to any one of claims 1 to 8.

11. The sealing material according to claim 10, having a durometer A hardness according to JIS K6253 of 40 or less.

12. The sealing material according to claim 10 or 11, formed into the shape of an O-ring, a sheet, or a rod.

13. A container using the sealing material according to any one of claims 10 to 12 as a component.

14. A container formed from a composite body comprising a sealing part made from the sealing material according to any one of claims 10 to 12 and a main body, produced by injection molding.

**15.** The container according to claim 14, wherein the main body is made from a thermoplastic resin and/or a thermoplastic elastomer composition and can be recycled.

**16.** A toner case having the sealing material according to any one of claims 10 to 12 as a component.

FIG. 1

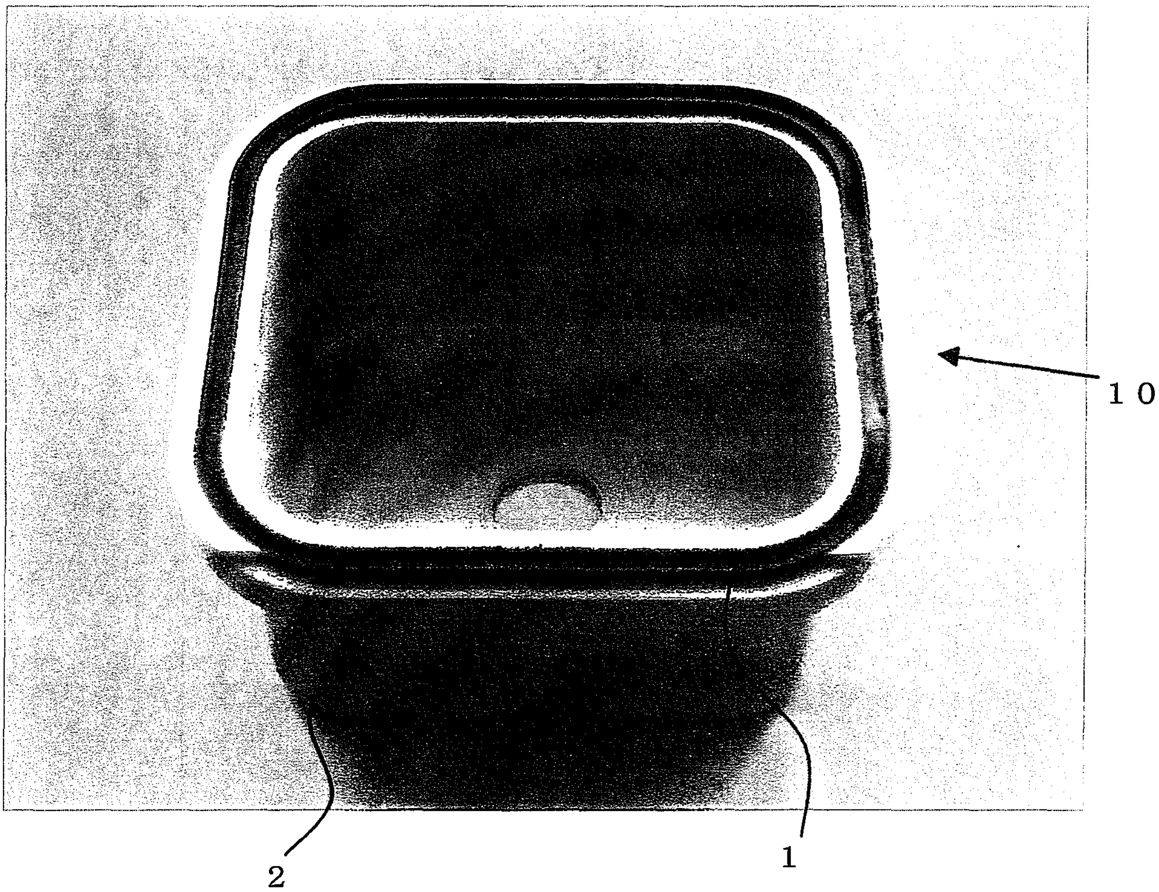

FIG. 2

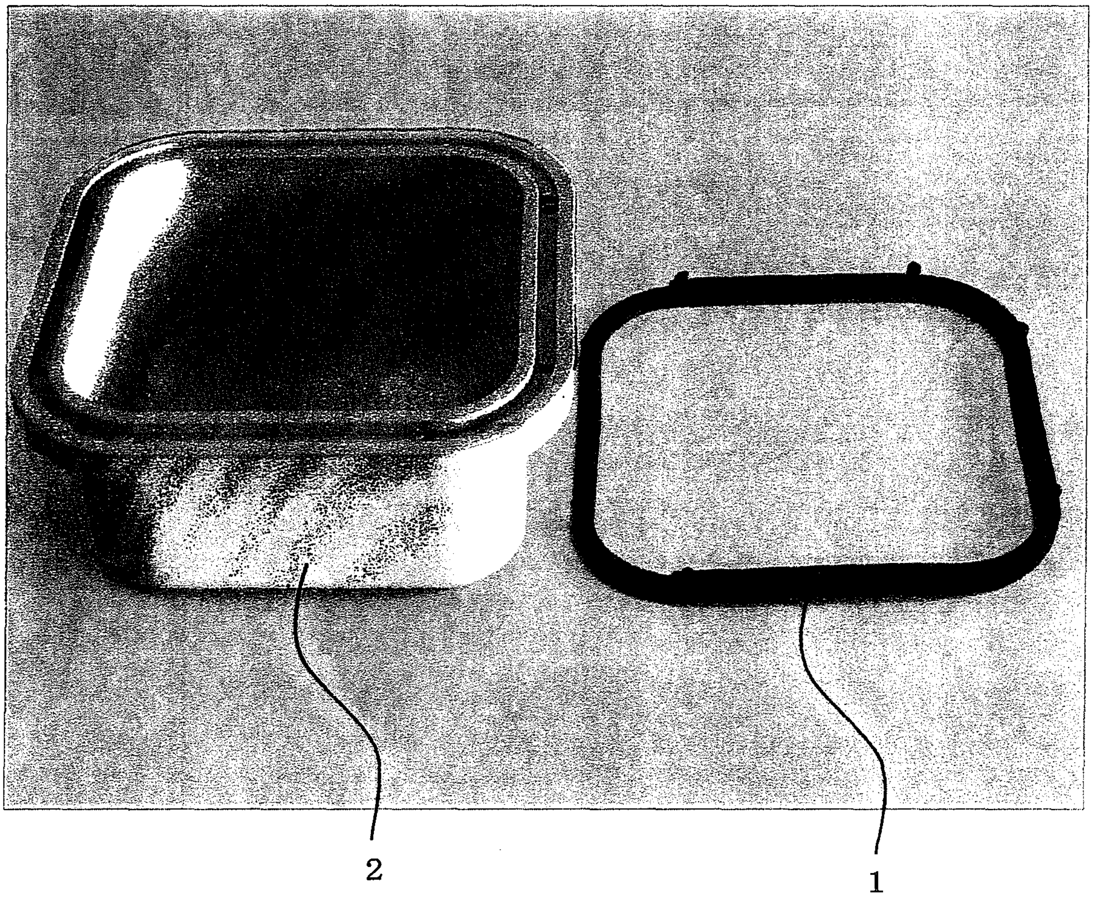

FIG.3

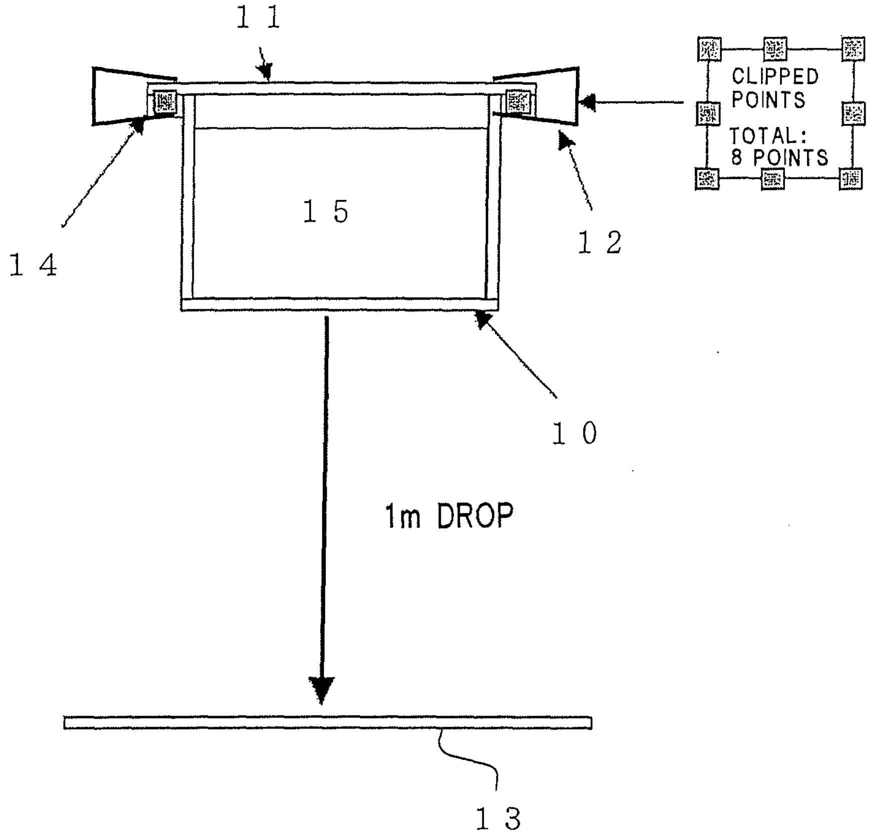

| INTERNATIONAL SEARCH REPORT | International application No. PCT/JP2005/001989 |
|---|---|

A. CLASSIFICATION OF SUBJECT MATTER
Int.Cl$^7$ C08L23/00, 15/00, 91/00, C08J3/24

According to International Patent Classification (IPC) or to both national classification and IPC

B. FIELDS SEARCHED

Minimum documentation searched (classification system followed by classification symbols)
Int.Cl$^7$ C08L1/00-101/16, C08J3/00-3/28

Documentation searched other than minimum documentation to the extent that such documents are included in the fields searched

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| X<br>Y | WO 03/25055 A (JSR Corp.),<br>27 March, 2003 (27.03.03),<br>Claims; examples 7 to 10, 16 to 18<br>& JP 2003-89732 A & JP 2003-171511 A<br>& EP 1441005 A & US 20050038186 A | 1-16<br>1-16 |
| Y | JP 2001-81199 A (Mitsubishi Chemical Corp.),<br>27 March, 2001 (27.03.01),<br>Claims; Par. No. [0003]; examples 1 to 4<br>(Family: none) | 1-16 |
| Y | JP 8-291239 A (Mitsui Sekiyu Kagaku Kabushiki Kaisha),<br>05 November, 1996 (05.11.96),<br>Claims; Par. Nos. [0002], [0006];<br>examples 1 to 4<br>& EP 738756 B & US 5856399 A | 1-16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>14 March, 2005 (14.03.05) | Date of mailing of the international search report<br>29 March, 2005 (29.03.05) |
|---|---|
| Name and mailing address of the ISA/<br>Japanese Patent Office<br><br>Facsimile No. | Authorized officer<br><br>Telephone No. |

Form PCT/ISA/210 (second sheet) (January 2004)

INTERNATIONAL SEARCH REPORT

International application No.
PCT/JP2005/001989

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-183450 A (Riken Technos Kabushiki Kaisha), 03 July, 2003 (03.07.03), Claims (Family: none) | 1-16 |
| A | JP 2002-327098 A (Riken Technos Kabushiki Kaisha), 15 November, 2002 (15.11.02), Claims (Family: none) | 1-16 |
| A | JP 2001-200118 A (Japan Polyolefins Co., Ltd.), 24 July, 2001 (24.07.01), Claims (Family: none) | 1-16 |
| A | JP 4-25520 A (Mitsui Sekiyu Kagaku Kabushiki Kaisha),. 29 January, 1992 (29.01.92), Claims (Family: none) | 1-16 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002201313 A
- JP 2002251061 A
- JP 7234579 A
- JP 2036244 A
- JP 62087315 A

### Non-patent literature cited in the description

- Development of hollow injection-molding technology by DSI. *Plastics Age,* August 2002, 74-84